# EUROPEAN PATENT SPECIFICATION

(11) **EP 2 722 106 B1**
(45) Date of publication and mention of the grant of the patent: **13.12.2017**
(21) Application number: 12800085.8
(22) Date of filing: 12.01.2012
(51) Int. Cl.: H01M 4/88, H01M 4/90, H01M 8/1018

(54) **FUEL CELL ELECTRODE CATALYST AND METHOD FOR PRODUCING SAME**
ELEKTRODENKATALYSATOR FÜR EINE BRENNSTOFFZELLE UND HERSTELLUNGSVERFAHREN DAFÜR
CATALYSEUR D'ÉLECTRODE DE PILE À COMBUSTIBLE ET SON PROCÉDÉ DE PRODUCTION

(30) Priority: 14.06.2011 JP 2011132102
(43) Date of publication of application: 23.04.2014
(73) Proprietor: Showa Denko K.K., Tokyo 105-8518 (JP)
(72) Inventor: TAKAHASHI, Akira, Tokyo 105-8518 (JP); HORIKITA, Masaki, Tokyo 105-8518 (JP); IMAI, Takuya, Tokyo 105-8518 (JP); WAKIZAKA, Yasuaki, Tokyo 105-8518 (JP); SATO, Takashi, Tokyo 105-8518 (JP)
(74) Representative: Strehl Schübel-Hopf & Partner
(86) International application number: PCT/JP2012/050529
(87) International publication number: WO 2012/172823

(56) References cited:
- EP-A1- 2 239 054
- EP-A1- 2 665 118
- WO-A1-2008/111570
- WO-A1-2009/091043
- WO-A1-2009/119523
- WO-A1-2010/041655
- JP-A- 2011 115 760
- J. RAWERS ET AL: "Nanostructure characterization of mechanical alloyed and consolidated iron alloys", MATERIALS SCIENCE AND ENGINEERING A, vol. 230, no. 1-2, 1 July 1997 (1997-07-01), pages 139-145, XP055147267, ISSN: 0921-5093, DOI: 10.1016/S0921-5093(97)00015-4

## Description

### TECHNICAL FIELD

The present invention relates to a fuel cell electrode catalyst and a production process thereof, more particularly a fuel cell electrode catalyst comprising a 13 group element and a transition metal, and a production process thereof.

### BACKGROUND ART

A polymer electrolyte fuel cell has a solid polymer electrolyte sandwiched between an anode and a cathode. A fuel is fed to the anode, and oxygen or air is fed to the cathode, whereby oxygen is reduced at the cathode to produce electricity. The fuel is primarily hydrogen, methanol or the like.

To increase the reaction rate in the fuel cell and enhance the energy conversion efficiency of the fuel cell, a layer containing a catalyst (hereinafter, also referred to as a "fuel cell catalyst layer") is conventionally provided on the surface of a cathode (an air electrode) or an anode (a fuel electrode) of the fuel cell.

As such a catalyst, noble metals are generally used. Of them, noble metals which are stable at high potential and have high catalytic activity, such as platinum or palladium, have been primarily used. However, since these noble metals are expensive and limited in resource amount, alternative catalysts have been desired.

As a catalyst alternative to noble metals, those entirely free of noble metals, such as base metal carbides, base metal oxides, base metal oxycarbonitrides, chalcogen compounds and carbon catalysts, have been reported (for example, see Patent Literature 1 to Patent Literature 4). These materials are inexpensive and exist abundantly as compared with noble metal materials such as platinum.

However, catalysts containing base metal materials described in Patent Literature 1 and Patent Literature 2 have a problem in terms of their failure to provide oxygen reducing activity that is sufficient on a practical basis.

Catalysts described in Patent Literature 3 and Patent Literature 4, although showing high oxygen reducing catalytic activity, have a problem in terms of their low stability under fuel cell operation conditions.

As a catalyst alternative to noble metals, Nb oxycarbonitrides and Ti oxycarbonitrides disclosed in Patent Literature 5 and Patent Literature 6 efficiently show the above performance to some degree.

Although the catalysts described in Patent Literature 5 and Patent Literature 6 have higher performance than conventional catalysts alternative to noble metals, the production process thereof needs to include heating treatment under a high temperature of from 1600 to 1800°C (for example, Example 1 of Patent Literature 5 or Example 1 of Patent Literature 6).

Performing such high-temperature heating treatment would require expensive equipment and strict operation control on an industrial basis, leading to the increase in the production cost.

Patent Literature 7 reports a technique relating to the production of a carbon-containing titanium oxynitride that contains carbon, nitrogen and oxygen. However, the application thereof is described only as films for solar heat collectors and photo catalysts, and there is neither disclosure nor study provided therein on a process for producing metal oxycarbonitride with particulate or fibrous shape that is highly useful as electrode catalysts.

However, according to the production process described in Patent Literature 7, the production of the carbon-containing titanium oxynitride requires two-stage synthesis: the preparation of a titanium oxynitride by reacting a nitrogen-containing organic compound with a titanium precursor, and the preparation of a carbon-containing titanium oxynitride by reacting a phenol resin with the titanium oxynitride precursor, and thus involves complicated steps and high cost.

In addition, since the phenol resin is a thermosetting resin having a three-dimensional network structure, it is difficult to homogenously mix and react the phenol resin with a metal oxide. In particular, since the thermal decomposition temperature of the phenol resin ranges from 400 to 900°C, at a temperature of not higher than 1000°C, the carbonization reaction is unlikely to take place due to the complete decomposition of the phenol resin.

Patent Literature 8 discloses a process for producing electrode catalyst characterized by calcining a mixed material of an oxide and a carbon material precursor. The production process, however, cannot provide an electrode catalyst having sufficient catalytic performance.

Patent Literature 9 discloses a fuel cell electrode catalyst obtained by using a polynuclear complex such as cobalt. This catalyst, however, has problems in terms of highly toxicity of the raw material, high cost and insufficient catalytic activity.

Patent Literature 10 discloses a fuel cell catalyst of an alloy containing Al, Cu, a VIII group element and a La series element; however, carbon is not a constituent in this catalyst.

Non-Patent Literature 2 discloses a process for producing an electrode catalyst characterized by calcining a mixed material of a titanium alkoxide and a carbon material precursor. The production process, however, does not use a nitrogen-containing organic substance and thus cannot provide an electrode catalyst having sufficient catalytic performance.

### CITATION LIST

### PATENT LITERATURE

[Patent Literature 1] JP-A-2004-303664
[Patent Literature 2] WO-A-07/072665
[Patent Literature 3] US-A-2004/0096728
[Patent Literature 4] JP-A-2005-19332
[Patent Literature 5] WO-A-2009/031383
[Patent Literature 6] WO-A-2009/107518
[Patent Literature 7] JP-A-2009-23887
[Patent Literature 8] JP-A-2009-255053
[Patent Literature 9] JP-A-2008-258150
[Patent Literature 10] JP-A-2003-187812
[Patent Literature 11] WO-A-2009/119523

### NON-PATENT LITERATURE

[Non-Patent Literature 1] Journal of Inorganic Materials (Chinese) 20, 4, P785
[Non-Patent Literature 2] Electrochemistry Communications Volume 12, Issue 9, September 2010, Pages 1177-1179

J. RAWERS ET AL: "Nanostructure characterization of mechanical alloyed and consolidated iron alloys", MATERIALS SCIENCE AND ENGINEERING A, vol. 230, no. 1-2, 1 July 1997 (1997-07-01) , pages 139-145, discloses a material suitable as a fuel cell electrode catalyst comprising chromium, iron , aluminum, carbon, nitrogen, and oxygen as constitutional elements.

WO 2010/041655 A1 and EP 2 239 054 A1 disclose catalysts that contain niobium and have excellent durability and high oxygen reducing ability.

### SUMMARY OF THE INVENTION

### TECHNICAL PROBLEM

It is an object of the present invention to solve the problems associated with the conventional techniques.

That is, it is an object of the present invention to provide a fuel cell electrode catalyst with high catalyst activity serving as a catalyst alternative to noble metals.

It is an object of the present invention to provide a fuel cell electrode catalyst with high durability serving as a catalyst alternative to noble metals.

It is another object of the present invention to provide a fuel cell electrode catalyst production process capable of producing a fuel cell electrode catalyst with high catalyst activity at low cost.

It is still another object of the present invention to provide a fuel cell electrode catalyst production process capable of producing a fuel cell electrode catalyst with high durability at low cost.

### TECHNICAL SOLUTION

The present invention relates to the following [1] to [15] .

[1] A fuel cell electrode catalyst comprising, at least:
   M1 that is at least one element selected from the group consisting of titanium and niobium;
   M2 that is iron;
   M3 that is aluminum;
   carbon;
   nitrogen; and
   oxygen, as constitutional elements, wherein
   when the atomic ratios of the elements (M1: M2: M3: carbon: nitrogen: oxygen) are represented by a:b:c:x:y:z, 0<a<1, 0<b□0.5, 0<c<1, 0<x□6, 0<y□2, 0<z□3 and a+b+c=1 are satisfied, and wherein the BET specific surface area is 100 m2/g or more.
[2] The fuel cell electrode catalyst according to [1] , wherein the "x" is 0.15 to 5.
[3] The fuel cell electrode catalyst according to [1] or [2], wherein the "y" is 0.01 to 1.5.
[4] The fuel cell electrode catalyst according to [1] to [3], wherein the "z" is 0.1 to 2.6.
[5] A process for producing a fuel cell electrode catalyst according to any one of [1] to [4], comprising:
   Step 1 of mixing, at least, a compound containing M1 that is at least one element selected from 3 to 7 group elements; a compound containing M2 that is at least one element selected from iron group elements; a compound containing M3 that is at least one element selected from 13 group elements; a nitrogen-containing organic compound; and a solvent, to provide a catalyst precursor solution,
   Step 2 of removing the solvent from the catalyst precursor solution to obtain a sold residue, and
   Step 3 of thermally treating the solid residue obtained in Step 2 at a temperature of 500 to 1200°C, to provide an electrode catalyst.
[6] The process for producing a fuel cell electrode catalyst according to [5] , wherein the M1-containing compound is at least one compound selected from the group consisting of metal nitrates, metal organic acid salts, metal oxychlorides, metal alkoxides, metal halides, metal perchlorates and metal hypochlorites.
[7] The process for producing a fuel cell electrode catalyst according to [5] or [6] , wherein the nitrogen-containing organic compound has, in the molecule, at least one kind selected from amino group, nitrile group, imide group, imine group, nitro group, amide group, azide group, aziridine group, azo group, isocyanate group, isothiocyanate group, oxyme group, diazo group, nitroso group, pyrrole ring, porphyrin ring, imidazole ring, pyridine ring, pyrimidine ring and pyrazine ring.
[8] The process for producing a fuel cell electrode catalyst according to any one of [5] to [7] , wherein the nitrogen-containing organic compound has, in the molecule, at least one group selected from hydroxyl group, carboxyl group, formyl group, halocarbonyl group, sulfonic acid group, phosphoric acid group, ketone group, ether group and ester group.
[9] The process for producing a fuel cell electrode catalyst according to any one of [5] to [8] , wherein in Step 3, the solid residue is thermally treated in an atmosphere containing an argon gas, a helium gas or a nitrogen gas.
[10] The process for producing a fuel cell electrode catalyst according to any one of [5] to [8] , wherein in Step 3, the solid residue is thermally treated in an atmosphere containing a hydrogen gas.
[11] An ink comprising the fuel cell electrode catalyst according to any one of [1] to [4] .
[12] A fuel cell catalyst layer comprising the fuel cell electrode catalyst according to any one of [1] to [4].
[13] An electrode comprising a fuel cell catalyst layer and a gas diffusion layer, wherein the fuel cell catalyst layer is the fuel cell catalyst layer according to [12].
[14] A membrane electrode assembly comprising a cathode, an anode and an electrolyte membrane interposed between the cathode and the anode, wherein the cathode is the electrode according to [13].
[15] A polymer electrolyte fuel cell comprising the membrane electrode assembly according to [14].

### ADVANTAGEOUS EFFECTS OF THE INVENTION

The fuel cell electrode catalyst of the present invention has higher catalyst activity than conventional catalysts alternative to noble metals. The fuel cell electrode catalyst of the present invention has higher durability than conventional catalysts alternative to noble metals. The fuel cell electrode catalyst of the present invention can be produced at low cost.

According to a process for producing a fuel cell electrode catalyst of the present invention, a fuel cell electrode catalyst with higher catalyst activity and higher durability that comprises a 13 group element and a transition metal can be provided without performing high-temperature thermal treatment (calcining) step, at lower cost, with the safety of production steps readily ensured.

### BRIEF DESCRIPTION OF DRAWINGS

[Fig. 1] Fig. 1 shows current-potential curve that evaluates the oxygen reduction ability of fuel cell electrode (1-1) of Example 1-1.
[Fig. 2] Fig. 2 shows current-potential curve that evaluates the oxygen reduction ability of fuel cell electrode (1-2) of Example 1-2.
[Fig. 3] Fig. 3 shows current-potential curve that evaluates the oxygen reduction ability of fuel cell electrode (1-3) of Example 1-3.
[Fig. 4] Fig. 4 shows current-potential curve that evaluates the oxygen reduction ability of fuel cell electrode (2) of Example 2.
[Fig. 5] Fig. 5 is powder X-ray diffraction spectrum of catalyst (3) of Example 3.
[Fig. 6] Fig. 6 shows current-potential curve that evaluates the oxygen reduction ability of fuel cell electrode (3) of Example 3.
[Fig. 7] Fig. 7 is a figure showing the result of constant current load measurement test of single cell (1) of Example 3.
[Fig. 8] Fig. 8 shows current-potential curve that evaluates the oxygen reduction ability of fuel cell electrode (4) of Example 4.
[Fig. 9] Fig. 9 shows current-potential curve that evaluates the oxygen reduction ability of fuel cell electrode (5) of Example 5.
[Fig. 10] Fig. 10 shows current-potential curve that evaluates the oxygen reduction ability of fuel cell electrode (6) of Reference Example 1.
[Fig. 11] Fig. 11 is a figure showing the result of constant current load measurement test of single cell (2) of Reference Example 1.
[Fig. 12] Fig. 12 shows current-potential curve that evaluates the oxygen reduction ability of fuel cell electrode (7) of Example 6.
[Fig. 13] Fig. 13 shows current-potential curve that evaluates the oxygen reduction ability of fuel cell electrode (8) of Example 7.
[Fig. 14] Fig. 14 shows current-potential curve that evaluates the oxygen reduction ability of fuel cell electrode (9) of Comparative Example 1.
[Fig. 15] Fig. 15 is powder X-ray diffraction spectrum of catalyst (10) of Comparative Example 2.
[Fig. 16] Fig. 16 shows current-potential curve that evaluates the oxygen reduction ability of fuel cell electrode (10) of Comparative Example 2.
[Fig. 17] Fig. 17 is a figure showing the result of constant current load measurement test of single cell (3) of Comparative Example 2.
[Fig. 18] Fig. 18 shows current-potential curve that evaluates the oxygen reduction ability of fuel cell electrode (11) of Comparative Example 3.
[Fig. 19] Fig. 19 shows current-potential curve that evaluates the oxygen reduction ability of fuel cell electrode (12) of Comparative Example 4.
[Fig. 20] Fig. 20 shows current-potential curve that evaluates the oxygen reduction ability of fuel cell electrode (13) of Comparative Example 5.
[Fig. 21] Fig. 21 shows current-potential curve that evaluates the oxygen reduction ability of fuel cell electrode (14) of Comparative Example 6.
[Fig. 22] Fig. 22 is an exemplary sectional view of a single cell of a polymer electrolyte fuel cell disintegrated.

### DESCRIPTION OF EMBODIMENTS

### [Fuel Cell Electrode Catalyst]

The fuel cell electrode catalyst of the present invention is defined in claim 1.

When M1 is composed of a plurality of elements, the number of atoms for M1 is the total number of atoms of these elements. This applies also to M3 and M2 described later.

The above fuel cell electrode catalyst (hereinafter also referred to as the "catalyst (A)") comprises, as metal elements, M1 that is at least one element selected from titanium and niobium (hereinafter also referred to as the "transition metal element M1"), and M3 that is aluminum (hereinafter also referred to as the "13 group element M3").

### <Effects expected as a result of the presence of 13 group element M3>

The effects expected as a result of the presence of the 13 group element M3 are as follows.
(1) Adding a 13 group element, which has a lower valence than a transition metal element M1, e.g., titanium, stabilizes, e.g., titanium so as to be not more than tetravalent, and allows for maintaining active sites.
(2) Since active sites are maintained with stability, catalysts with high durability are expected to be provided.
(3) Even when the electrode catalyst is used at such a high potential under such a highly oxidative atmosphere as to cause the elution of the transition metal element M1, the 13 group element M3 is passivated to prevent further elution of the transition metal element M1.

The transition metal element M1 is titanium or niobium. By the transition metal element M1 being these elements, electrode catalysts with high activity can be easily obtained.

The 13 group element M3 is aluminum. By the 13 group element M3 being this element, electrode catalysts with high activity can be easily obtained.

When the atomic ratios of the transition metal element M1, the 13 group element M3, carbon, nitrogen and oxygen, which are constitutional elements of the fuel cell electrode catalyst of the present invention, (M1: M3: carbon: nitrogen: oxygen) are represented by a:c:x:y:z, 0<a<1, 0<c<1, 0<x≤6, 0<y≤2 and 0<z≤3 are satisfied, provided that a+c=1.

In terms of allowing for higher activity of the electrode catalyst, the range of "x" is more preferably 0.15≤x≤5, still more preferably 0.2≤x≤4, particularly preferably 1≤x≤3; the range of "y" is more preferably 0.01≤y≤1.5, still more preferably 0.03≤y≤1.5, particularly preferably 0.05≤y≤1; and the range of "z" is more preferably 0.1≤z≤2.6, still more preferably 0.3≤z≤2, particularly preferably 0.5≤z≤1.9.

In terms of allowing for higher activity of the electrode catalyst, the range of "a" is more preferably 0.3≤a<1, still more preferably 0.3≤a≤0.95, particularly preferably 0.5≤a≤0.95.

The values of "a", "c", "x", "y" and "z" described above are those measured by the method adopted in Examples described later. The oxygen reduction onset potential as measured by the following method (A) of the catalyst (A) is preferably not less than 0.6 V (vs. RHE), more preferably not less than 0.7 V (vs. RHE), still more preferably not less than 0.8 V (vs. RHE), on the basis of a reversible hydrogen electrode.

The oxygen reduction current density as measured by the following method (A) of the catalyst (A) is preferably not less than 0.5 mA/cm² at 0.6 V, more preferably not less than 0.5 mA/cm² at 0.7 V, still more preferably not less than 0.5 mA/cm² at 0.75 V.

### [Measurement method (A):

The catalyst dispersed in carbon, which is an electron conductive substance, is added to a solvent so that the catalyst and the carbon account for 1% by mass. The mixture is ultrasonically stirred to give a suspension. The carbon herein is carbon black (specific surface area: 100 to 300 m²/g) (e.g., XC-72 manufactured by Cabot Corporation), and the catalyst is dispersed therein with a catalyst:carbon mass ratio of 95:5. The solvent is a mixture of isopropyl alcohol:water (mass ratio) = 2:1.

While ultrasonicating the suspension, a 10 µl portion thereof is collected and is quickly dropped on a glassy carbon electrode (diameter: 5.2 mm) and dried under 120°C for 5 minutes to form a fuel cell catalyst layer containing the catalyst on the glassy carbon electrode. This dropping and drying operation is repeated until 1.0 mg or more of the fuel cell catalyst layer is formed on the carbon electrode surface.

Subsequently, 10 µL of NAFION (registered trade mark) (a 5% NAFION (registered trade mark) solution (DE521) manufactured by DuPont) diluted ten times with isopropyl alcohol is dropped on the fuel cell catalyst layer and is dried at 120°C for 1 hour.

The electrode thus obtained is polarized in a 0.5 mol/L sulfuric acid aqueous solution at 30°C under an oxygen atmosphere and a nitrogen atmosphere at a potential scanning rate of 5 mV/sec, thereby measuring a current-potential curve. As a reference electrode, a reversible hydrogen electrode is used in a sulfuric acid aqueous solution of the same concentration. In the current-potential curve, the potential at which the reduction current starts to differ by 0.2 µA/cm² or more between the reduction current under the oxygen atmosphere and that under the nitrogen atmosphere is defined as the oxygen reduction onset potential.]

In the present invention, the oxygen reduction current density can be determined in such a manner as described below.

At first, from the result of the measurement method (A) described above, a difference between the reduction current under oxygen atmosphere and the reduction current under nitrogen atmosphere at 0.75 V (vs. RHE)) is calculated. The calculated value is divided by an area of the electrode to provide a value and this value is defined as an oxygen reduction current density (mA/cm²). When the current density at 0.75 V is not more than 0.5 mA/cm², the evaluation of the performance is based on an oxygen reduction current density obtained at 0.7 V (vs. RHE), and when the current density at 0.7 V is not more than 0.5 mA/cm², evaluation of the performance is based on current density obtained at 0.6 V (vs. RHE).

The catalyst (A) preferably has (110) plane distance, as measured by XRD measurement, which is smaller than (110) plane distance of a catalyst produced with no use of M3 in the same manner as the catalyst (A) (hereinafter also referred to as the "catalyst (B)"). It is preferable that the difference in plane distance between these catalysts is more than 0 Å and not more than 0.006 Å; more preferably 0.0003 Å to 0.002 Å, still more preferably 0.0005 Å to 0.001 Å. The above-described difference in plane distance is preferable, in which case a 13 group element is incorporated into a transition metal skeleton resulting in improved performance.

### <Effects expected as a result of the presence of iron (M2) >

The effects expected as a result of the presence of the iron M2 are as follows.
(1) Even when the electrode catalyst is used at such a high potential under such a highly oxidative atmosphere as to cause the elution of the transition metal element M1, iron M2 is passivated to prevent further elution of the transition metal element M1.
(2) The presence in the electrode catalyst of the transition metal element M1 and iron M2 causes the bias of charge at a part where atoms of both the metal elements are adjacent to each other. This leads to adsorption or reaction of reactants or elimination of products that would not be achievable in the electrode catalyst containing the transition metal element M1 alone as a metal element.

In the catalyst (C) , when the atomic ratios of the transition metal element M1, iron M2, the 13 group element M3, carbon, nitrogen and oxygen, which are constitutional elements of the fuel cell electrode catalyst of the present invention, (M1: M2: M3: carbon: nitrogen: oxygen) are represented by a:b:c:x:y:z, 0<a<1, 0<b≤0.5, 0<c<1, 0<x≤6, 0<y≤2, 0<z≤3 are satisfied wherein a+b+c=1 . The catalyst (C), which contains M2 in this way, provides much higher performance.

In terms of allowing for higher activity of the electrode catalyst, preferable ranges of "x", "y" and "z" are the same as those for the catalyst (A): the range of "a" is more preferably 0.3≤a≤1, still more preferably 0.3≤a≤0.95, particularly preferably 0.5≤a≤0.95; the range of "b" is more preferably 0.01<b≤0.5, still more preferably 0.02<b≤0.4, particularly preferably 0.05<b≤0.3.

The values of "a", "b", "c", "x", "y" and "z" described above are those measured by the method adopted in Examples described later. The oxygen reduction onset potential as measured in accordance with the measurement method (A) of the catalyst (C) is preferably not less than 0.6 V (vs. RHE), more preferably not less than 0.7 V (vs. RHE), still more preferably not less than 0.8 V (vs. RHE), on the basis of a reversible hydrogen electrode.

The oxygen reduction current density as measured by the following method (A) of the catalyst (C) is preferably not less than 0.5 mA/cm² at 0.6 V, more preferably not less than 0.5 mA/cm² at 0.7 V, still more preferably not less than 0.5 mA/cm² at 0.75 V.

The catalyst (C) preferably has (110) plane distance as measured by XRD measurement that is smaller by 0.0005 Å or more, more preferably by 0.0003 Å or more, than (110) plane distance as measured by XRD measurement of a catalyst (hereinafter also referred to as "catalyst (D)") including the same constituent elements of the catalyst (C) but excluding M3 wherein when the atomic ratios of the elements (M1: M2: carbon: nitrogen: oxygen) of the catalyst (D) are represented by a:b:x:y:z, 0<a<1, 0<b≤0.5, 0<x≤6, 0<y≤2, 0<z≤3 and a+b=1 are satisfied, and BET specific surface area of the catalyst (D) is 100 m²/g or more. The catalyst (C) having (110) plane distance that is smaller by 0.0005 Å or more than (110) plane distance of the catalyst (D) is preferable, in which case a 13 group element is incorporated into a transition metal skeleton resulting in improved performance.

### <BET specific surface area>

The catalyst (A) and the catalyst (C) of the present invention each have a specific surface area as determined by BET method of not less than 100 m²/g, preferably not less than 150 m²/g, still more preferably not less than 200 m²/g. The upper limit of the specific surface area is not particularly limited. When the specific surface area is not less than 100 m²/g, ink dispersibility is high, and high catalytic performance is obtained. If the specific surface area is less than 100 m²/g, in which case catalyst surface area is small, ink dispersibility is low, and three-phase interface formation becomes difficult at the time of forming catalyst layers, with a result that high catalytic performance cannot be exhibited. The upper limit of the specific surface area is not particularly limited. According to the production process described below, the upper limit of the specific surface area of the resultant catalyst (A) and catalyst (C) is about 600 m²/g, and in most cases about 450 m²/g.

The catalyst (A) and the catalyst (C) of the present invention preferably have a 3 to 7 group element atom, a 13 group element atom, a carbon atom, a nitrogen atom and an oxygen atom, and has a crystalline structure of an oxide, a carbide or a nitride of the 3 to 7 group element and 13 group element, or a plurality of crystalline structures thereof. The results of the study of the crystalline structures by X-ray diffraction analysis and the elemental analysis of the catalyst (A) and the catalyst (C) lead to the presumption that the catalyst (A) and the catalyst (C) have an oxide structure of the transition metal element and the 13 group element with the site of the oxygen atom of the oxide structure being substituted with a carbon atom or nitrogen atom; or has a carbide, nitride or carbonitride structure of the transition metal element and the 13 group element with the site of the carbon atom or the nitrogen atom being substituted with an oxygen atom; or has a mixed structure containing such structures.

The process for producing the catalyst (A) and the catalyst (C) of the present invention is not particularly limited, and the catalyst (A) and the catalyst (C) may be produced for example by the following production method.

### [Process for Producing Fuel Cell Electrode Catalyst]

A process for producing a fuel cell electrode catalyst of the present invention comprises:
Step 1 of mixing, at least, a compound containing M1; a compound containing M3; a nitrogen-containing organic compound; and a solvent, to provide a catalyst precursor solution
Step 2 of removing the solvent from the catalyst precursor solution to obtain a sold residue, and
Step 3 of thermally treating the solid residue obtained in Step 2 at a temperature of 500 to 1200°C to provide an electrode catalyst.

In the present specification, atoms and ions are not strictly distinguished from each other and are referred to as "atoms", unless otherwise noted.

### (Step 1)

In Step 1, a compound containing M1 (hereinafter also referred to as the "transition metal M1-containing compound"); a compound containing M3 (hereinafter also referred to as the "13 group element-containing compound"); a nitrogen-containing organic compound and a solvent are mixed with one another, to prepare a catalyst precursor solution.

A mixing procedure may be performed by a method in which into one container, a solvent is prepared, and thereto, the transition metal M1-containing compound, the 13 group element-containing compound and the nitrogen-containing organic compound are added and dissolved to mix these components; or by a method in which a solution of the transition metal M1-containing compound, a solution of the 13 group element-containing compound, and a solution of the nitrogen-containing organic compound are prepared, and these solutions are mixed. If a solvent for which the solubility of the transition metal M1-containing compound is high is different from a solvent for which the solubility of the nitrogen-containing organic compound is high, the latter-mentioned mixing procedure is preferred.

The mixing procedure is preferably performed with stirring, in order to increase the dissolution rate of each component in a solvent.

When the solution of the transition metal M1-containing compound, the solution of the 13 group element-containing compound, and the solution of the nitrogen-containing organic compound are mixed with each other, it is preferable that two solutions are supplied to the other solution at a constant rate with a pump or the like.

It is also preferable that the solution of the transition metal M1-containing compound and the solution of the 13 group element-containing compound are added little by little to the solution of the nitrogen-containing organic compound (i.e., the whole amount is not added at a time)..

Preferably, the catalyst precursor solution does not contain a precipitate and a dispersion medium. However, these may be contained at a small amount (5 % by mass or less, preferably 2% by mass or less, more preferably 1% by mass or less of the whole amount of the solution).

The catalyst precursor solution is preferably transparent. For example, the value as measured in accordance with the method for measuring see-through property of liquid described in JIS K0102 of the catalyst precursor solution is preferably 1 cm or more, more preferably 2 cm or more, still more preferably 5 cm or more..

In Step 1, the transition metal M1-containing compound, the 13 group element-containing compound, the nitrogen-containing organic compound and a solvent may be introduced in a pressure-applicable container such as an autoclave and pressurized at a pressure of ordinary pressure or more to mix these components.

The temperature in mixing the transition metal M1-containing compound, the 13 group element-containing compound, the nitrogen-containing organic compound and a solvent is, for example, 0 to 60°C. In view of a complex being considered to be formed from the transition metal M1-containing compound and the nitrogen-containing organic compound, if this temperature is excessively high and the solvent contains water, it is considered that the complex is hydrolyzed to cause a hydroxide precipitate, leading to the failure to provide an excellent catalyst, whereas if this temperature is excessively low, it is considered that the transition metal M1-containing compound is precipitated before the complex is formed, leading to the failure to provide an excellent catalyst.

### <Transition metal M1-containing compound>

The metals of M1 contained in the transition metal M1-containing compound are titanium and niobium. These may be used singly or two or more kinds may be used in combination.

The transition metal M1-containing compound preferably contains at least one atom selected from an oxygen atom and a halogen atom. Specific examples thereof include metal phosphates, metal sulfates, metal nitrates, metal organic acid salts, metal oxyhalides (intermediate hydrolysates of metal halides), metal alkoxides, metal halides, metal halogen acid salts and metal hypohalous acid salts and metal complexes. These may be used singly or two or more kinds may be used in combination.

As the metal alkoxides, methoxide, propoxide, isopropoxide, ethoxide, butoxide, and isobutoxide of the transition metals are preferable; and isopropoxide, ethoxide and butoxide of the transition metals are more preferable. The metal alkoxide may have one kind of alkoxy group, or may have two or more kinds of alkoxy groups.

As the transition metal M1-containing compound having an oxygen atom, oxides, alkoxides, acetylacetone complexes, oxychlorides and sulfates of the transition metals are preferable; in terms of cost, oxides, alkoxides and acetylacetone complexes are more preferable; in terms of solubility in a solvent in the liquid phase, alkoxides and acetylacetone complexes are more preferable.

As the metal halides, chlorides, bromides and iodides of the transition metals are preferable. As the metal oxyhalides, oxychlorides, oxybromides and oxyiodides of the transition metals are preferable.

Specific examples of the transition metal M1-containing compound include:
titanium compounds such as titanium dioxide, titanium oxide having not less than one and not more than two oxygen atoms relative to one titanium atom, titanium tetramethoxide, titanium tetraethoxide, titanium tetrapropoxide, titanium tetraisopropoxide, titanium tetrabutoxide, titanium tetraisobutoxide, titanium tetrapentoxide, titanium tetraacetylacetonato, titanium oxydiacetylacetonato, tris(acetylacetonato)titanium(II) chloride, titanium tetrachloride, titanium trichloride, titanium oxychloride, titanium tetrabromide, titanium tribromide, titanium oxybromide, titanium tetraiodide, titanium triiodide and titanium oxyiodide;
niobium compounds such as niobium pentaoxide, niobium oxide having not more than 2.5 oxygen atoms relative to one niobium atom, niobium pentamethoxide, niobium pentaethoxide, niobium pentaisopropoxide, niobium pentabutoxide, niobium pentapentoxide, niobium pentachloride, niobium oxychloride, niobium pentabromide, niobium oxybromide, niobium pentaiodide and niobium oxyiodide.

These may be used singly or two or more kinds may be used in combination.

Of these compounds, in view of allowing the resultant catalyst to be fine particles having a uniform particle diameter and to have high activity, preferred are:
titanium tetraethoxide, titanium tetrachloride, titanium oxychloride, titanium tetraisopropoxide, titanium tetraacetylacetonato,
niobium pentaethoxide, niobium pentachloride, niobium oxychloride, niobium pentaisopropoxide.

More preferred are titanium tetraisopropoxide, titanium tetraacetylacetonato, niobium ethoxide and niobium isopropoxide.

When the catalyst (C) is produced, the transition metal M1-containing compound, a compound containing iron M2 (hereinafter also referred to as the "iron group element M2-containing compound"), and the 13 group element-containing compound are used. The use of the iron group element M2-containing compound improves the performance of the resultant catalyst.

It is presumed from the observation of XPS spectrum of the catalyst that the use of the iron group element M2-containing compound promotes the formation of a bond between the transition metal element M1 (e.g., titanium) and a nitrogen atom and consequently the performance of the catalyst is improved.

### <Iron group element M2-containing compound>

Specific examples of the iron group element M2-containing compounds include:
iron compounds such as iron(II) chloride, iron(III) chloride, iron(III) sulfate, iron(II) sulfide, iron(III) sulfide, potassium ferrocyanide, potassium ferricyanide, ammonium ferrocyanide, ammoniumferricyanide, iron ferrocyanide, iron(II) nitrate, iron(III) nitrate, iron(II) oxalate, iron(III) oxalate, iron(II) phosphate, iron(III) phosphate ferrocene, iron(II) hydroxide, iron (III) hydroxide, iron (II) oxide, iron (III) oxide, triiron tetraoxide, iron(II) acetate, iron(II) lactate and iron(III) citrate.

These may be used singly or two or more kinds may be used in combination.

Of these compounds, preferred are:
iron(II) chloride, iron(III) chloride, potassium ferrocyanide, potassium ferricyanide, ammonium ferrocyanide, ammonium ferricyanide, iron(II) acetate, and iron(II) lactate.

Further preferred are iron(II) chloride, iron(III) chloride, potassium ferrocyanide, potassium ferricyanide, ammonium ferrocyanide, ammonium ferricyanide, iron(II) acetate, and iron (II) lactate.

### <13 group element-containing compound>

M3 contained in the 13 group element-containing compound is aluminum.

The 13 group element-containing compound preferably contains at least one atom selected from an oxygen atom and a halogen atom. Specific examples thereof include phosphoric acid compounds, sulfuric acid compounds, nitric acid compounds, organic acid compounds, oxyhalides (intermediate hydrolysates of metal halides), alkoxides, halides, halogen acid compounds, hypohalous acid compounds and complexes. These may be used singly or two or more kinds may be used in combination.

As the alkoxides, methoxide, propoxide, isopropoxide, ethoxide, butoxide, and isobutoxide of the 13 group elements are preferable; and isopropoxide, ethoxide and butoxide of the 13 group elements are more preferable. The alkoxide may have one kind of alkoxy group, or may have two or more kinds of alkoxy groups.

As the 13 group element-containing compound having an oxygen atom, oxides, alkoxides, acetylacetone complexes, oxychlorides and sulfuric acid compounds are preferable; in terms of cost, oxides, alkoxides and acetylacetone complexes are more preferable; in terms of solubility in a solvent in the liquid phase, alkoxides and acetylacetone complexes are more preferable.

As the halides, chlorides, bromides and iodides of the 13 group elements are preferable. As the halogen oxides, oxychlorides, oxybromides and oxyiodides are preferable.

Specific examples of the 13 group element-containing compounds include aluminum sulfide, aluminum sulfate, aluminum fluoride, aluminum chloride, aluminum bromide, aluminum iodide, aluminum hydroxide, aluminum phosphate, aluminum triisopropoxide, aluminum trimethoxide, aluminum triethoxide, aluminum acetate, and aluminum acetylacetonato.

In view of allowing the resultant catalyst to be fine particles having a uniform particle diameter and to have high activity, preferred are
aluminum triisopropoxide, aluminum trimethoxide, aluminum triethoxide, aluminum acetylacetonato, and aluminum chloride. More preferred are:
aluminum triisopropoxide and aluminum acetylacetonato.

### <Nitrogen-containing organic compound>

As the nitrogen-containing organic compound, preferred is a compound capable of becoming a ligand that can be coordinated to metal atoms in the transition metal M1-containing compound and in the iron group element M2-containing compound (preferable is a compound capable of forming a mononuclear complex); and more preferred is a compound capable of becoming a multidentate ligand (preferable is a bidentate ligand or a tridentate ligand) (compound capable of forming a chelate).

The nitrogen-containing organic compounds may be used singly, or two or more kinds may be used in combination.

The nitrogen-containing organic compound preferably has a functional group such as amino group, nitrile group, imide group, imine group, nitro group, amide group, azide group, aziridine group, azo group, isocyanate group, isothiocyanate group, oxyme group, diazo group and nitroso group, or a ring such as pyrrole ring, porphyrin ring, imidazole ring, pyridine ring, pyrimidine ring and pyrazine ring (these functional groups and rings are also collectively referred to as a "nitrogen-containing molecular group").

The nitrogen-containing organic compound, by containing the nitrogen-containing molecular group in the molecule, after subjected to the mixing in Step 1, is considered to be more strongly coordinated to a transition metal atom derived from the transition metal M1-containing compound and the iron group element M2-containing compound.

Among the nitrogen-containing molecular group, amino group, imine group, amide group, pyrrole ring, pyridine ring and pyrazine ring are more preferable; and amino group, imine group, pyrrole ring and pyrazine ring are still more preferable. Amino group and pyrazine ring are particularly preferable because of allowing the resultant catalyst to have particularly high activity.

Specific examples of the nitrogen-containing organic compound wherein the compound does not contain an oxygen atom include melamine, ethylenediamine, ethylenediamine·dihydrochloride, triazole, acetonitrile, acrylonitrile, ethyleneimine, aniline, pyrrole and polyethyleneimine. Of these, ethylenediamine and ethylenediamine·dihydrochloride are preferable because of allowing the resultant catalyst to have high activity.

The nitrogen-containing organic compound preferably has hydroxyl group, carboxyl group, formyl group, halocarbonyl group, sulfonic acid group, phosphoric acid group, ketone group, ether group or ester group (these are also collectively referred to as an "oxygen-containing molecular group"). The nitrogen-containing organic compound, by containing the oxygen-containing molecular group in the molecule, after subjected to the mixing in Step 1, is considered to be more strongly coordinated to transition metal atoms derived from the transition metal M1-containing compound and the iron group element M2-containing compound.

Among the oxygen-containing molecular group, carboxyl group and formyl group are particularly preferable because of allowing the resultant catalyst to have particularly high activity.

As the nitrogen-containing organic compound that contains an oxygen atom in the molecule, compounds having the nitrogen-containing molecular group and the oxygen-containing molecular group are preferable. Such compounds, after subjected to Step 1, are considered to be particularly strongly coordinated to transition metals atom derived from the transition metal M1-containing compound and the iron group element M2-containing compound.

As the compounds having the nitrogen-containing molecular group and the oxygen-containing molecular group, amino acids having amino group and carboxyl group, and derivatives thereof are preferable.

As the amino acids, preferred are alanine, arginine, asparagine, asparagine acid, cysteine, glutamine, glutamic acid, glycine, histidine, isoleucine, leucine, lysine, methionine, phenylalanine, serine, threonine, tryptophan, tyrosine, valine, norvaline, glycylglycine, triglycine and tetraglycine. Because of allowing the resultant catalyst to have high activity, alanine, glycine, lysine, methionine, tyrosine are more preferable. Because of allowing the resultant catalyst to have extremely high activity, alanine, glycine and lysine are particularly preferable.

As the nitrogen-containing organic compound that contains an oxygen atom in the molecule, specific examples include, in addition to the above amino acids, acylpyrroles such as acetylpyrrole, pyrrolecarboxylic acid, acylimidazoles such as acetylimidazole, carbonyldiimidazole, imidazolecarboxylic acid, pyrazole, acetanilide, pyrazinecarboxylic acid, piperidinecarboxylic acid, piperazinecarboxylic acid, morpholine, pyrimidinecarboxylic acid, nicotinic acid, 2-pyridinecarboxylic acid, 2,4-pyridinedicarboxylic acid, 8-quinolinol, and polyvinylpyrrolidone. Because of allowing the resultant catalyst to have high activity, preferred are compounds capable of becoming a bidentate ligand: specifically, preferred are pyrrole-2-carboxylic acid, imidazole-4-carboxylic acid, 2-pyrazinecarboxylic acid, 2-piperidinecarboxylic acid, 2-piperazinecarboxylic acid, nicotinic acid, 2-pyridinecarboxylic acid, 2,4-pyridinedicarboxylic acid and 8-quinolinol; and more preferred are 2-pyrazinecarboxylic acid and 2-pyridinecarboxylic acid.

The ratio (B/A) of the number of all atoms "B" of carbon of the nitrogen-containing organic compound used in Step 1 to the number of all atoms "A" of transition metal elements of the transition metal M1-containing compound and the iron group element M2-containing compound used in Step 1 is preferably 200 or less, more preferably 150 or less, still more preferably 80 or less, particularly preferably 30 or less, in terms of allowing the thermal treatment in Step 3 to be performed while decreasing components eliminating as carbon compounds such as carbon dioxide and carbon monoxide, i.e., decreasing an emission gas during catalyst production. The ratio is preferably 1 or more, more preferably 2 or more, still more preferably 3 or more, particularly preferably 5 or more in terms of obtaining a catalyst having good activity.

The ratio (C/A) of the number of all atoms "C" of nitrogen of the nitrogen-containing organic compound used in Step 1 to the number of all atoms "A" of transition metal elements of the transition metal M1-containing compound and the iron group element M2-containing compound used in Step 1 is preferably 28 or less, more preferably 17 or less, still more preferably 12 or less, particularly preferably 8.5 or less, in terms of obtaining a catalyst having good activity. The ratio is preferably 1 or more, more preferably 2.5 or more, still more preferably 3 or more, particularly preferably 3.5 or more, in terms of obtaining a catalyst having good activity.

The ratio (D/A) of the number of all atoms "D" of the 13 group element-containing compound used in Step 1 to the number of all atoms "A" of transition metal elements of the transition metal M1-containing compound and the iron group element M2-containing compound used in Step 1 is preferably 30 or less, more preferably 25 or less, particularly preferably 15 or less, in terms of obtaining a catalyst having good activity. The ratio is preferably 0.001 or more, more preferably 0.005 or more, particularly preferably 0.01 or more, in terms of obtaining a catalyst having good activity.

### <Solvent>

Examples of the solvent include water, acetic acid and alcohols. As the alcohols, ethanol, methanol, butanol, propanol and ethoxyethanol are preferable; and ethanol and methanol are more preferable. In order to increase solubility, it is preferable that the above solvent contains an acid. As the acid, acetic acid, nitric acid, hydrochloric acid, phosphoric acid, and citric acid are preferable; and acetic acid and nitric acid are more preferable. These may be used singly or two or more kinds may be used in combination.

### <Precipitation suppressant>

The use of a precipitation suppressant can suppress the occurrence of precipitation derived from the transition metal M1-containing compound and provide a transparent catalyst precursor solution. When the transition metal M1-containing compound contains a halogen atom and moreover the solvent is water alone or the combination of water and alcohols, it is preferred that as a precipitation suppressant, a strong acid such as hydrochloric acid is added.

In the case where the transition metal M1-containing compound is a metal complex with the solvent being water alone or a combination of water and another compound, it is preferable to use, as a precipitation suppressant, a compound having a diketone structure; more preferably diacetyl, acetylacetone, 2,5-hexanedione or dimedone. The precipitation suppressant may be added at any stage in the step 1.

In Step 1, in a preferable embodiment, a solution that contains the transition metal M1-containing compound, the 13 group element-containing compound and the precipitation suppressant is prepared, and then this solution is mixed with the nitrogen-containing organic compound, to thereby provide a catalyst precursor solution. By performing Step 1 in this way, the occurrence of precipitates can be prevented with more certainty.

In the case where the iron group element M2-containing compound is used, in Step 1, in a preferable embodiment, a solution that contains the transition metal M1-containing compound, the 13 group element-containing compound and the precipitation suppressant is prepared, and then this solution is mixed with the nitrogen-containing organic compound and the iron group element M2-containing compound, to thereby provide a catalyst precursor solution.

### (Step 2)

In Step 2, the solvent is removed from the catalyst precursor solution obtained in Step 1, to obtain a solid residue.

The solvent removal may be performed in air, or may be performed under an atmosphere of a nitrogen gas or an inert gas (for example, argon, helium). As these gases, in terms of cost, nitrogen and argon are preferable; and nitrogen is more preferable.

The temperature in the solvent removal may be ordinary temperature when the vapor pressure of the solvent is large, but in terms of mass production of the catalyst, temperature is preferably 30°C or higher, more preferably 40°C or higher, still more preferably 50°C or higher. In terms of preventing the decomposition of the catalyst precursor that is presumed to be a metal complex, such as a chelate, contained in the solution obtained in Step 1, the temperature is preferably 250°C or lower, more preferably 150°C or lower, still more preferably 110°C or lower.

The solvent removal may be performed under atmospheric pressure when the vapor pressure of the solvent is large, but may be performed under reduced pressure (e.g., 0.1 Pa to 0.1 MPa) in order to remove the solvent within a shorter period of time. The solvent removal may be performed with the mixture obtained in Step 1 being allowed to stand still. However, in order to obtain a more homogenous solid residue, preferred is the solvent removal with the mixture being stirred.

Depending on solvent-removal methods or properties of the transition metal M1-containing compound, the iron group element M2-containing compound, the 13 group element-containing compound, or the nitrogen-containing organic compound, the solid residue obtained in Step 2 may have a non-uniform composition or be at a non-uniform agglomeration state. In this case, the solid residue may be subjected to mixing and disintegrating to provide more uniform and finer powders to be used in Step 3, whereby a catalyst can be obtained which has more uniform particle diameter.

### (Step 3)

In Step 3, the solid residue obtained in Step 2 is thermally treated to provide an electrode catalyst.

The temperature in this thermal treatment is 500 to 1200°C. The temperature is preferably 600 to 1150°C, more preferably 700 to 1050°C, in order to obtain increased durability and large specific surface area.

If the temperature in this thermal treatment is so higher than the above range, calcining and particle growth occur between particles of the resultant electrode catalyst, consequently decreasing the specific surface area of the electrode catalyst. This leads to inferior processability when the particles are processed to a catalyst layer by coating method. On the other hand, if the temperature in this thermal treatment is so lower than the above range, a catalyst which has high activity cannot be obtained. The thermal treatment temperature that is higher in the above range is preferable in terms of increasing the durability of the catalyst.

Exemplary methods of the thermal treatment method include standing method (e.g., method using an electric furnace), stirring method (e.g., method using a rotary kiln), dropping method and powder capturing method.

When the thermal treatment is performed by the standing method, the heating rate, which is not particularly limited, is preferably about 1°C/min to 100°C/min, more preferably 5°C/min to 50°C/min. The heating time is preferably 0.1 to 10 hours, more preferably 0.2 to 5 hours, still more preferably 0.2 to 3 hours. When the heating by the standing method is performed in a tubular furnace, the heating time of the electrode catalyst particles is 0.1 to 10 hours, preferably 0.2 to 5 hours. The heating time in this range is preferable, leading to the tendency of the formation of uniform electrode catalyst particles.

Under the stirring method, the heating time of the solid residue is usually 10 minutes to 5 hours, preferably 10 minutes to 2 hours. Under this method, when the solid residue is continuously heated, for example, by using a gradient furnace, the heating time is defined as an average retention time as calculated from the sample flowing amount in a constant furnace.

Under the dropping method, the heating time of the solid residue is usually 0.5 to 10 minutes, preferably 0.5 to 3 minutes. The heating time within this range is preferable, leading to the tendency of the formation of uniform electrode catalyst particles.

Under the powder capturing method, the heating time of the solid residue is 0.2 second to 1 minute, preferably 0.2 to 10 seconds. The heating time within this range is preferable, leading to the tendency of the formation of uniform electrode catalyst particles. When an electrode catalyst having particularly high catalytic activity is desired, it is desirable to use an electric furnace employing electricity as a heat source, which allows for the strict controlling of temperature. The atmosphere in performing the thermal treatment is preferably an atmosphere of nitrogen or an inert gas, which allows the resultant electrode catalyst to have increased activity. Among the gases, in view of relatively low cost and easy availability, nitrogen, argon, helium are preferable; and nitrogen and argon are more preferable. These gases may be used singly, or two or more kinds may be used in combination.

The presence of a reactive gas in the atmosphere in performing the thermal treatment may allow the resultant electrode catalyst to have higher catalytic performance. Examples of the reactive gas include a nitrogen gas, an oxygen gas, a hydrogen gas and carbon-containing gases such as methane, and nitrogen-containing gases such as ammonia.

When the atmosphere in performing the thermal treatment contains a hydrogen gas, the concentration of hydrogen gas is, for example, 100% by volume or lower, preferably 0.01 to 10% by volume, more preferably 1 to 5% by volume.

When the atmosphere in performing the thermal treatment contains an oxygen gas, the concentration of oxygen gas is, for example, not more than 10% by volume, preferably 0.01 to 10% by volume, more preferably 0.01 to 5% by volume.

When none of the transition metal M1-containing compound, the iron group element M2-containing compound, the 13 group element-containing compound, the nitrogen-containing organic compound and the solvent contains an oxygen atom, the thermal treatment is performed preferably under the atmosphere containing an oxygen gas.

After the thermal treatment, a thermally-treated product may be disintegrated. Performing the disintegrating can improve the processability in using the resultant electrode catalyst to produce an electrode, and properties of the resultant electrode.

For the disintegrating, for example, a roll-rotating mill, a ball mill, a small-diameter ball mill (bead mill), a medium-stirring mill, a gas stream pulverizing machine, a mortar, an automatic kneading mortar, a disintegrating tank or a jet mill may be used.

### [Uses]

The catalyst (A) of the present invention can be used as an alternative catalyst which is alternative to catalysts of noble metals such as platinum. Here, the catalyst (A) is understood as including the catalyst (C). However, the catalyst (A) of the present invention may comprise a noble metal such as platinum as long as satisfying the requirements described above. In uses where more inexpensiveness is needed, it is preferable that the catalyst (A) of the present invention does not contain noble metals such as platinum. The catalyst (A) of the present invention can be used as a catalyst alternative to part of noble metal catalysts such as platinum: that is, the catalyst (A) of the present invention and the noble metal catalysts such as platinum can be used in combination.

The fuel cell catalyst layer of the present invention comprises the catalyst (A).

Fuel cell catalyst layers include anode catalyst layers and cathode catalyst layers. The catalyst (A) may be used in any one of these layers. The catalyst (A), which has excellent durability and high oxygen reducing activity, is preferably used in cathode catalyst layers.

The fuel cell catalyst layer of the present invention preferably further comprises electron conductive powder. When the fuel cell catalyst layer comprising the catalyst (A) further comprises the electron conductive powder, the reduction current can be more increased. It is considered that the electron conductive powder can increase the reduction current because of allowing the catalyst (A) to have an electrical bond that induces electrochemical reaction.

The electron conductive particles are usually used as a carrier of the catalyst.

The catalyst (A) has conductivity to some degree, but in order for the catalyst (A) to be given more electrons or in order for a reactant to receive many electrons from the catalyst (A), the catalyst (A), in order to be provided with conductivity, may have carrier particles mixed therein. The carrier particles may be added to the catalyst (A) produced after subjected to Step 1 to Step 3, or may be added in any stage of from Step 1 to Step 3.

Examples of materials of the electron conductive particles include carbon, conductive polymers, conductive ceramics, metals and conductive inorganic oxides such as tungsten oxide and iridium oxide. These materials can be used singly or in combination with one another. In particular, the electron conductive particles composed of carbon have a large specific surface area, and moreover those having a small particle diameter are easily available inexpensively. Furthermore, they are excellent in chemical resistance and high-potential resistance. Thus, preferred is carbon or a mixture of carbon and other electron conductive particles. That is, the fuel cell catalyst layer according to a preferred embodiment comprises the catalyst (A) and carbon.

Examples of the carbon include carbon black, graphite, activated carbon, carbon nanotube, carbon nanofiber, carbon nanohorn, fullerene, porous carbon and graphene. If the particle diameter of the electron conductive particles composed of carbon is excessively small, an electron conductive path is not readily formed. If the particle diameter is excessively large, the fuel cell catalyst layer tends to have decreased gas diffusion properties, or the catalyst usage rate tends to be lowered. Therefore, the particle diameter of the electron conductive particles composed of carbon is preferably in the range of 10 to 1000 nm, and more preferably 10 to 100 nm.

When the electron conductive particles are composed of carbon, the weight ratio of the catalyst (A) to the electron conductive particles (catalyst: electron conductive particles) is preferably 4:1 to 1000:1.

The conductive polymers are not particularly limited. Examples thereof include polyacetylene, poly-p-phenylene, polyaniline, polyalkylaniline, polypyrrole, polythiophene, polyindole, poly-1,5-diaminoanthraquinone, polyaminodiphenyl, poly(o-phenylenediamine), poly(quinolinium) salt, polypyridine, polyquinoxaline, polyphenylquinoxaline and derivatives thereof. Of these, polypyrrole, polyaniline and polythiophene are preferred, and polypyrrole is more preferred. These conductive polymers may contain a dopant in order to obtain high conductivity.

The polymer electrolytes are not particularly limited as long as being those commonly used in fuel cell catalyst layers. Specific examples thereof include perfluorocarbon polymers having a sulfonic acid group (such as NAFION (registered trade mark) (DuPont, a 5% NAFION (registered trade name) solution (DE521)), hydrocarbon polymer compounds having a sulfonic acid group, polymer compounds doped with inorganic acids such as phosphoric acid, organic/inorganic hybrid polymers partially substituted with proton conductive functional groups, and proton conductors composed of a polymer matrix impregnated with a phosphoric acid solution or a sulfuric acid solution. Of these, NAFION (registered trade mark) (DuPont, a 5% NAFION (registered trade name) solution (DE521)) is preferable.

The fuel cell catalyst layer of the present invention may be used as an anode catalyst layer or a cathode catalyst layer. The fuel cell catalyst layer of the present invention contains the catalyst that has high oxygen reducing activity and is resistant to corrosion in acidic electrolytes even at high potential. Accordingly, the catalyst layer of the present invention is suited for use as a catalyst layer provided in a cathode of a fuel cell (as a cathode catalyst layer). In particular, the catalyst layer is suitably provided particularly in a cathode of a membrane electrode assembly in a polymer electrolyte fuel cell.

The catalyst (A) may be dispersed on the electron conductive particles serving as a carrier by methods such as airborne dispersion methods and in-liquid dispersion methods. The in-liquid dispersion methods are preferable because a dispersion of the catalyst (A) and the electron conductive particles in a solvent can be used in the step for forming a fuel cell catalyst layer. Exemplary in-liquid dispersion methods include an orifice-choked flow method, a rotational shear flow method and an ultrasonic method. The solvents used in the in-liquid dispersion methods are not particularly limited as long as the catalysts or the electron conductive particles are not corroded and are dispersed therein. Volatile liquid organic solvents, water or the like are generally used.

When the catalyst (A) is dispersed on the electron conductive particles, the electrolyte described above and a dispersant may be dispersed together.

The fuel cell catalyst layer may be formed by any methods without limitation. For example, a suspension containing the catalyst (A), the electron conductive particles and the electrolyte, namely an in ink, may be applied to an electrolyte membrane or a gas diffusion layer as described later. The application methods include dipping, screen printing, roll coating and spraying. In another embodiment, a suspension containing the catalyst (A), the electron conductive particles and the electrolyte may be applied or filtered on a substrate to form a fuel cell catalyst layer, and the catalyst layer may be transferred to an electrolyte membrane.

The electrode of the present invention comprises the fuel cell catalyst layer and a porous support layer.

The electrode of the present invention may be used as a cathode or an anode. The electrode of the present invention has excellent durability and high catalytic performance, and thus is suitably used as a cathode, leading to higher industrial advantage.

The porous support layer is a layer which diffuses gas (hereinafter, also referred to as a "gas diffusion layer"). The gas diffusion layer is not particularly limited as long as having electron conductivity, high gas diffusion properties and high corrosion resistance. Carbon-based porous materials such as carbon paper and carbon cloth, and stainless steel and anticorrosive-coated aluminum foils for weight reduction are generally used.

The membrane electrode assembly of the present invention comprises a cathode, an anode and an electrolyte membrane interposed between the cathode and the anode. The cathode and/or the anode is the electrode as described above.

Catalytic performance and durability of the membrane electrode assembly can be evaluated, for example, by cell voltage and slope of voltage drop over time Δ that are determined by the following manners.

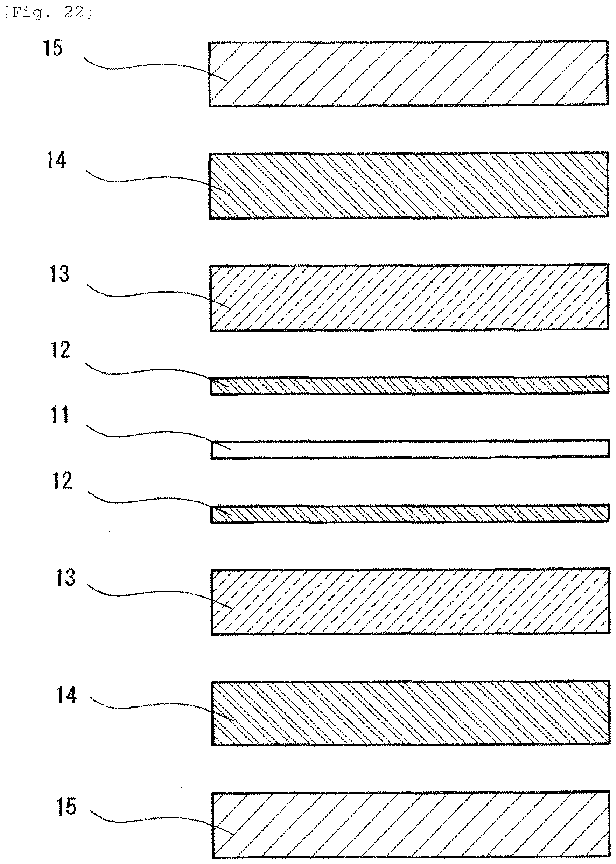

First, as illustrated in Fig. 22, the membrane electrode assembly 11 is held by sealing materials (gaskets 12), separators each having a gas flow passage 13, collectors 14 and rubber heaters 15, and fixed with a bolt, and secured so that the pressure of the contacted surface becomes a prescribed value (4 N), to thereby prepare a single cell of a polymer electrolyte fuel cell.

To the anode side, hydrogen is supplied as a fuel at a flow rate of 0.1 L/min, and to the cathode side, oxygen is supplied as an oxidizing agent at a flow rate of 0.1 L/min, and while applying a back pressure of 300 kPa to both sides, at a temperature of the above single cell of 80°C, at 0.1 A/cm², constant current load measurement test is performed.

It is shown that the higher the cell voltage is, the higher the catalytic performance in MEA is, and that the smaller the value of the slope of voltage drop over time Δ (mV/h) is, the higher the durability of the catalyst is.

In terms of the performance of cells, cell voltage is desirably 0.1 V or more, more desirably 0.2 V or more, still more desirably 0.3 V or more.

In terms of the durability of cells, the slope of voltage drop Δ (mV/h) is desirably not more than 3 mV/h, more desirably not more than 2 mV/h, still more desirably not more than 1.5 mV/h.

The electrolyte membranes may be generally perfluorosulfonic acid electrolyte membranes or hydrocarbon electrolyte membranes. Further, polymer microporous membranes impregnated with liquid electrolyte, or porous membranes filled with polymer electrolyte may be used.

The fuel cell of the present invention comprises the membrane electrode assembly as described above.

The electrode reaction in fuel cells takes place at a so-called three-phase interface (electrolyte-electrode catalyst-reaction gas). The fuel cells are classified according to the electrolytes used, into several types such as molten carbonate fuel cells (MCFC), phosphoric acid fuel cells (PAFC), solid oxide fuel cells (SOFC) and polymer electrolyte fuel cells (PEFC). In particular, the membrane electrode assembly of the present invention is preferably used in polymer electrolyte fuel cells.

The fuel cell comprising the catalyst (A) of the present invention has high performance even when not using any noble metals, and is considerably inexpensive as compared with when platinum is used as a catalyst. The fuel cell of the present invention is equipped with a function selected from the group consisting of electricity generating function, light emitting function, heat generating function, acoustic generating function, movement function, display function and charging function, and can improve performance of an article, particularly a mobile article having a fuel cell. The fuel cell is held preferably on a surface or an inside of an article.

### <Specific examples of articles comprising the fuel cell of the present invention>

Specific examples of articles comprising the fuel cell of the present invention include architectural structures such as buildings, houses and tents, illumination equipment such as fluorescent light, LED, organic EL, street light, interior illumination and traffic light, machinery, automotive devices including vehicles, household appliances, agricultural equipment, electronic devices, mobile information terminals including mobile phones, beauty instruments, portable tools, sanitary goods such as bathroom goods, furniture, toys, ornaments, bulletin boards, cool boxes, outdoor goods such as exterior generators, teaching materials, artificial flowers, items of artwork, power source for cardiac pacemakers and power source for heating and cooling equipped with Peltier devices.

### EXAMPLE

The present invention will be described based on examples hereinbelow.

In Examples and Comparative Examples, measurements were performed by the following methods.

### [Analysis method]

### 1. Elemental analysis

Carbon: Approximately 0.1 g of a sample was weighed and measured with EMIA-110 manufactured by HORIBA, Ltd.

Nitrogen and oxygen: Approximately 0.1 g of a sample was weighed, sealed in a Ni capsule, and was measured with an oxygen/nitrogen analyzer.

Metal elements: Approximately 0.1 g of a sample was weighed in a platinum plate, and was thermally decomposed using an acid. This thermally-decomposed product was collected to a constant volume and diluted, and quantitatively analyzed with ICP-MS.

### 2. BET specific surface area

0.15 g of a sample was collected and its specific surface area was measured with a fully-automatic BET specific surface area measurement apparatus, Macsorb (manufactured by MOUNTECH CO., LTD.). The treatment time and the treatment temperature were set at 30 minutes and 200°C, respectively.

### 3. Ink dispersibility

A material composed of 0.3 g of a catalyst, 4.5 g of an aqueous solution containing 0.225 g of NAFION (registered trade mark) (5% NAFION (registered trademark) aqueous solution, manufactured by Wako Pure Chemical Industries, Ltd.), and 0.075 g of carbon black as a conductive material (ketjen black EC300J, manufactured by LION Corporation) was mixed with 50 mL of 2-propanol (manufactured by Wako Pure Chemical Industries, Ltd.) as a solvent, to prepare an ink. The ink was dispersed with an ultrasonic wave dispersion machine (UT-106H, manufactured by Sharp Manufacturing Systems Corporation) for 30 minutes. Thereafter, catalyst dispersion condition at the bottom part of the ink was visually observed.

Ink dispersibility was evaluated under the following criterion.
Good: No catalyst precipitates are observed at the bottom part.
Poor: Catalyst precipitates are observed at the bottom part.

### 4. Powder X-ray diffraction (XRD)

Powder X-ray diffraction of a sample was performed using Rotaflex manufactured by Rigaku Corporation.

With regard to the counting of diffraction peaks in powder X-ray diffraction for each sample, a signal that was detected with a signal (S) to noise (N) ratio (S/N) of 2 or more was regarded as a single peak. Here, the noise (N) is the width of the baseline.

### [Anode Preparation Example 1]

### 1. Preparation of anode ink

Into 50 mL of pure water, 0.6 g platinum-supporting carbon (TEC10E60E, manufactured by TANAKA KIKINZOKU KOGYO K.K.) and 5 g of an aqueous solution containing 0.25 g of a proton conductive material (NAFION (registered trade name)) (5% NAFION (registered trade name) aqueous solution, manufactured by Wako Pure Chemical Industries, Ltd.) were introduced. The resultant solution was mixed with an ultrasonic wave dispersion machine (UT-106H, manufactured by Sharp Manufacturing Systems Corporation) for 1 hour, to prepare an anode ink (1).

### 2. Preparation of electrode having anode catalyst layer

A gas diffusion layer (carbon paper (TGP-H-060, manufactured by TORAY INDUSTRIES INC.) was immersed in acetone for 30 seconds and degreased, and dried. Then, the gas diffusion layer was immersed in an aqueous 10% polytetrafluoroethylene (hereinafter also referred to as "PTFE") solution for 30 seconds.

The immersed product was dried at room temperature, and was heated at 350°C for 1 hour, to provide a water-repellent gas diffusion layer having PTFE dispersed in the carbon paper (hereinafter also referred to as "GDL").

The above GDL was formed into the size of 5 cm × 5 cm, and the surface thereof was coated with the above anode ink (1) using an automatic spray-coating apparatus (manufactured by SAN-EI TECH Ltd.) at 80°C. By repeating the spray-coating, an electrode having an anode catalyst layer (1) in which the amount of platinum (Pt) per unit area was 1 mg/cm² was prepared.

### [Example 1-1]

### 1. Production of catalyst

9.37 g of titanium tetraisopropoxide (manufactured by Junsei Chemical Co., Ltd.) as a transition metal M1-containing compound, 0.702 g of aluminum triisopropoxide (manufactured by Wako Pure Chemical Industries, Ltd.) and 5.12 g of acetylacetone (manufactured by Junsei Chemical Co., Ltd.) were added to a solution of 32 mL of acetic acid (manufactured by Wako Pure Chemical Industries, Ltd.), and the resultant solution was stirred at room temperature, to prepare a transition metal M1-containing mixture solution. On the other hand, 10.0 g of glycine (manufactured by Wako Pure Chemical Industries, Ltd.) as a nitrogen-containing organic compound and 0.582 g of iron acetate (manufactured by Aldrich) as an iron group element M2-containing compound were added to 120 mL of pure water, and by stirring at room temperature, were completely dissolved, to prepare a mixture solution that contained a nitrogen-containing organic compound. The transition metal M1-containing mixture solution was slowly added to the mixture solution that contained a nitrogen-containing organic compound, to provide a transparent catalyst precursor solution. The catalyst precursor solution was heated with a rotary evaporator in a nitrogen atmosphere under reduced pressure with the temperature of a water bath set at about 60°C, and thereby the solvent was slowly evaporated. The solvent was completely evaporated and the resultant solid residue was finely and homogenously crushed with a mortar, to provide a powder.

This powder was introduced to a quartz furnace, and was heated to 890°C under the atmosphere containing 4% by volume of a hydrogen gas and 96% by volume of a nitrogen gas at a heating rate of 20°C/min, and was held at 890°C for 15 minutes, and then allowed to cool, to provide a powdery catalyst (hereinafter also referred to as the "catalyst (1-1)"). BET specific surface area, elemental analysis result and ink dispersibility evaluation of this catalyst are indicated in Table 1. In the catalyst (1-1), no precipitates were seen at the ink bottom part, and high ink dispersibility was observed.

### 2. Production of fuel cell electrode

The catalyst (1-1) in an amount of 0.095 g and carbon (XC-72 manufactured by Cabot Corporation) in an amount of 0.005 g were added to 10 g of a solution obtained by mixing isopropyl alcohol and pure water at a mass ratio between isopropyl alcohol and pure water of 2:1. The mixture was ultrasonically stirred to give a suspended mixture. 30 µl of this mixture was applied on a glassy carbon electrode (diameter: 5.2 mm, manufactured by Tokai Carbon Co., Ltd.) and was dried at 120°C for 1 hour, thereby forming 1.0 mg or more of a fuel cell catalyst layer on the carbon electrode surface. Subsequently, 10 µl of NAFION (registered trade name) (a 5% NAFION (registered trade name) solution (DE521) manufactured by DuPont) diluted ten times with isopropyl alcohol was applied thereon and was dried at 120°C for 1 hour. A fuel cell electrode (1) was thus obtained.

### 3. Evaluation of oxygen reducing activity

The fuel cell electrode (1-1) prepared was polarized in a 0.5 mol/L sulfuric acid aqueous solution at 30°C under an oxygen atmosphere and a nitrogen atmosphere at a potential scanning rate of 5 mV/sec to a lower potential side, starting from 1.1 V, thereby measuring each current-potential curve. The current value was divided by each electrode area, and a value obtained by subtracting the current density observed in the nitrogen atmosphere from the current density observed in the oxygen atmosphere was defined as an oxygen reduction current density. In this case, as a reference electrode, a reversible hydrogen electrode was used in a sulfuric acid aqueous solution of the same concentration.

It is shown that the higher the oxygen reduction potential is, the higher the catalytic performance of the catalyst in the fuel cell electrode is.

From the result of the above measurement, a difference between the reduction current under oxygen atmosphere and the reduction current under nitrogen atmosphere at 0.75 V (vs. RHE) was calculated. The calculated value was divided by an area of the electrode to provide a value and this value was defined as an oxygen reduction current density (mA/cm²).

From the oxygen reduction onset potential and the oxygen reduction current density, the catalytic performance of the fuel cell electrode (1-1) prepared was evaluated. A potential providing an oxygen reduction current density of 0.2 µA/cm² is defined as an oxygen reduction onset potential.

That is, the higher the oxygen reduction onset potential and the larger the oxygen reduction current density are, the higher the catalytic performance of the catalyst in the fuel cell electrode is.

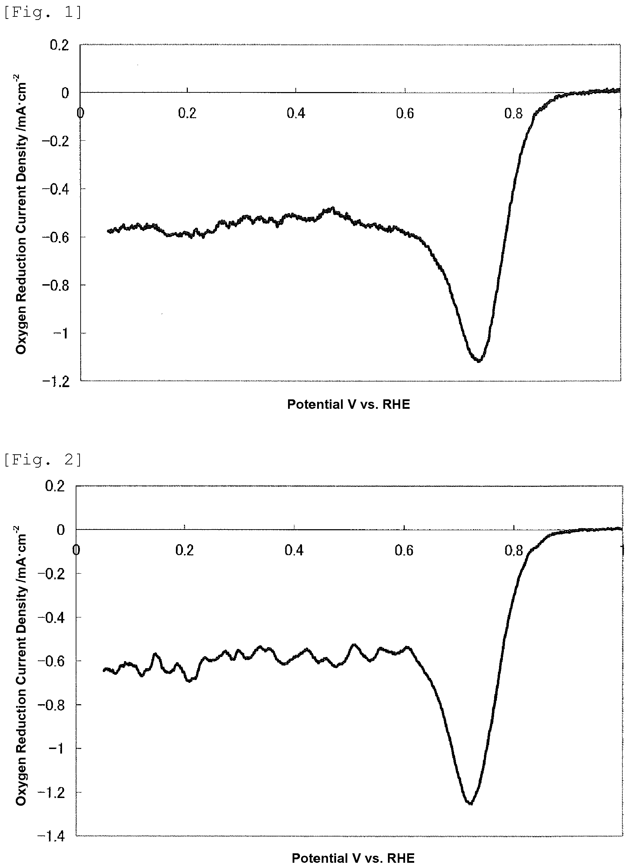

Fig.1 shows current-potential curve obtained in the above measurement.

The catalyst (1-1) prepared in Example 1-1 had an oxygen reduction onset potential of 0.93 V (vs. RHE), and an oxygen reduction current density at 0.75 V (vs. RHE) of 1.05 mA/cm², and had high catalytic performance.

### [Example 1-2]

### 1. Preparation of catalyst

By the same method as in Example 1-1 except that the calcining temperature was 1000°C, a catalyst (1-2) was synthesized. BET specific surface area, elemental analysis result and ink dispersibility evaluation of this catalyst are indicated in Table 1. In the catalyst (1-2), no precipitates were seen at the ink bottom part, and high ink dispersibility was observed.

### 2. Production of fuel cell electrode

By the same method as in Example 1-1 except that the catalyst (1-1) was replaced with the catalyst (1-2), a fuel cell electrode (1-2) was obtained.

By the same method as in Example 1-1 except that the fuel cell electrode (1-1) was replaced with the fuel cell electrode (1-2), catalytic performance was evaluated.

Fig. 2 shows current-potential curve obtained in the above measurement.

The catalyst (1-2) prepared in Example 1-2 had an oxygen reduction onset potential of 0.92 V (vs. RHE) and an oxygen reduction current density at 0.75 V (vs. RHE) of 1.00 mA/cm², and had high catalytic performance.

### [Example 1-3]

By the same method as in Example 1-1 except that the calcining temperature was 1050°C, a catalyst (1-3) was synthesized. BET specific surface area, elemental analysis result and ink dispersibility evaluation of this catalyst are indicated in Table 1. In the catalyst (1-3), no precipitates were seen at the ink bottom part, and high ink dispersibility was observed.

### 2. Production of fuel cell electrode

By the same method as in Example 1-1 except that the catalyst (1-1) was replaced with the catalyst (1-3), a fuel cell electrode (1-3) was obtained.

By the same method as in Example 1-1 except that the fuel cell electrode (1-1) was replaced with the fuel cell electrode (1-3), catalytic performance was evaluated.

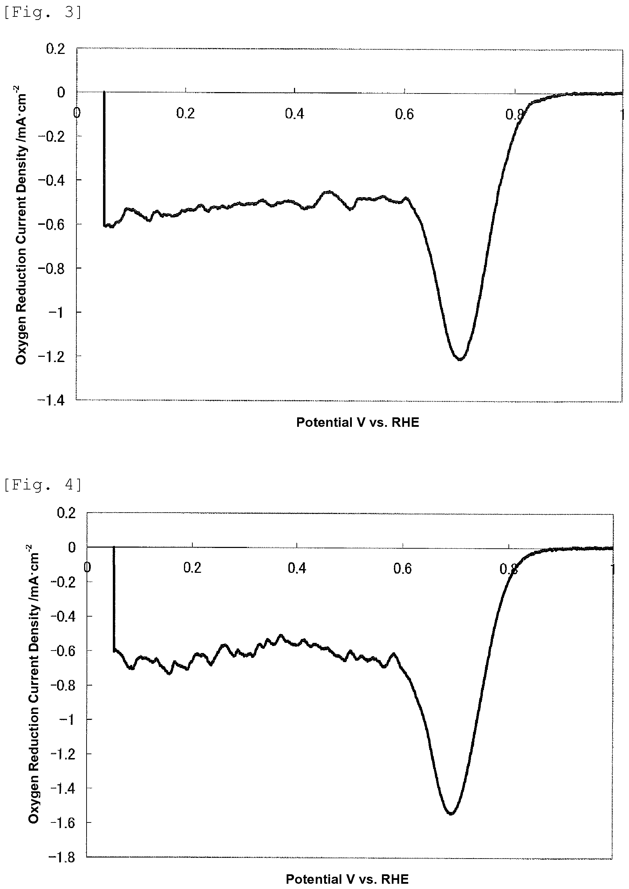

Fig. 3 shows current-potential curve obtained in the above measurement.

The catalyst (1-3) prepared in Example 1-3 had an oxygen reduction onset potential of 0.91 V (vs. RHE) and an oxygen reduction current density at 0.75 V (vs. RHE) of 0.72 mA/cm², and had high catalytic performance.

### [Example 2]

### 1. Production of catalyst

9.37 g of titanium tetraisopropoxide (manufactured by Junsei Chemical Co., Ltd.) as a transition metal M1-containing compound, 0.070 g of aluminum triisopropoxide (manufactured by Wako Pure Chemical Industries, Ltd.) and 5.12 g of acetylacetone (manufactured by Junsei Chemical Co., Ltd.) were added to a solution of 32 mL of acetic acid (manufactured by Wako Pure Chemical Industries, Ltd.), and the resultant solution was stirred at room temperature, to prepare a transition metal M1-containing mixture solution. On the other hand, 10.0 g of glycine (manufactured by Wako Pure Chemical Industries, Ltd.) as a nitrogen-containing organic compound and 0.582 g of iron acetate (manufactured by Aldrich) as an iron group element M2-containing compound were added to 120 mL of pure water, and by stirring at room temperature, were completely dissolved, to prepare a mixture solution that contained a nitrogen-containing organic compound. The transition metal M1-containing mixture solution was slowly added to the mixture solution that contained a nitrogen-containing organic compound, to provide a transparent catalyst precursor solution. The catalyst precursor solution was heated with a rotary evaporator in a nitrogen atmosphere under reduced pressure with the temperature of a water bath set at about 60°C, and thereby the solvent was slowly evaporated. The solvent was completely evaporated and the resultant solid residue was finely and homogenously crushed with a mortar, to provide a powder.

By using this powder, and by the same method as in Example 1-1 except that the calcining temperature was 1000°C, a catalyst (2) was synthesized. BET specific surface area, elemental analysis result and ink dispersibility evaluation of this catalyst are indicated in Table 1. In the catalyst (2), no precipitates were seen at the ink bottom part, and high ink dispersibility was observed.

### 2. Production of fuel cell electrode

By the same method as in Example 1-1 except that the catalyst (1-1) was replaced with the catalyst (2), a fuel cell electrode (2) was obtained.

By the same method as in Example 1-1 except that the fuel cell electrode (1-1) was replaced with the fuel cell electrode (2), catalytic performance was evaluated.

Fig. 4 shows current-potential curve obtained in the above measurement.

The catalyst (2) prepared in Example 2 had an oxygen reduction onset potential of 0.93 V (vs. RHE) and an oxygen reduction current density at 0.75 V (vs. RHE) of 0.83 mA/cm², and had high catalytic performance.

### [Example 3]

### 1. Production of catalyst

9.37 g of titanium tetraisopropoxide (manufactured by Junsei Chemical Co., Ltd.) as a transition metal M1-containing compound, 0.176 6 g of aluminum triisopropoxide (manufactured by Wako Pure Chemical Industries, Ltd.) and 5.12 g of acetylacetone (manufactured by Junsei Chemical Co., Ltd.) were added to a solution of 32 mL of acetic acid (manufactured by Wako Pure Chemical Industries, Ltd.), and the resultant solution was stirred at room temperature, to prepare a transition metal M1-containing mixture solution. On the other hand, 10.0 g of glycine (manufactured by Wako Pure Chemical Industries, Ltd.) as a nitrogen-containing organic compound and 0.582 g of iron acetate (manufactured by Aldrich) as an iron group element M2-containing compound were added to 120 mL of pure water, and by stirring at room temperature, were completely dissolved, to prepare a mixture solution that contained a nitrogen-containing organic compound. The transition metal M1-containing mixture solution was slowly added to the mixture solution that contained a nitrogen-containing organic compound, to provide a transparent catalyst precursor solution. The catalyst precursor solution was heated and stirred with a rotary evaporator in a nitrogen atmosphere under reduced pressure with the temperature of a water bath set at about 60°C, and thereby the solvent was slowly evaporated. The solvent was completely evaporated and the resultant solid residue was finely and homogenously crushed with a mortar, to provide a powder.

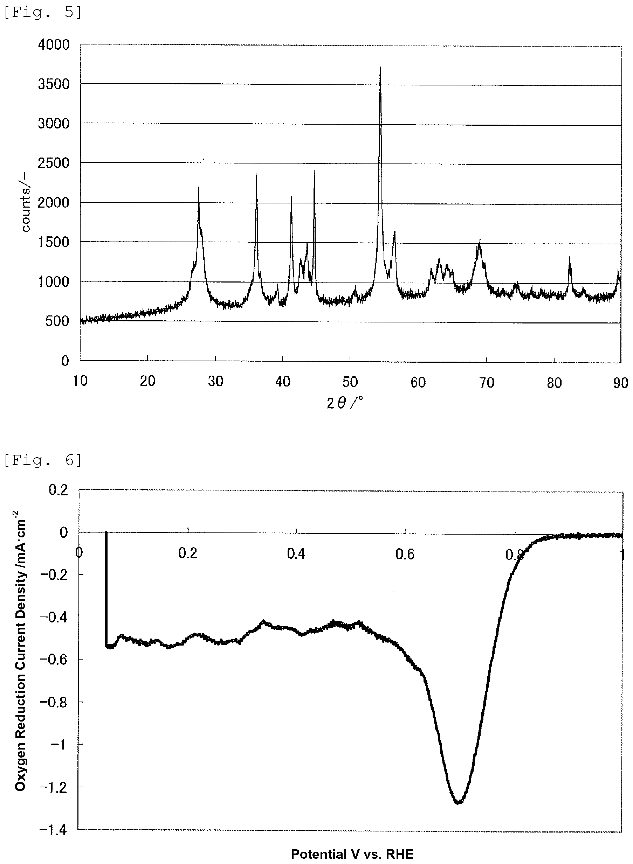

By using this powder, and by the same method as in Example 1-1 except that the calcining temperature was 1000°C, a catalyst (3) was synthesized. BET specific surface area, elemental analysis result and ink dispersibility evaluation of this catalyst are indicated in Table 1. In the catalyst (3), no precipitates were seen at the ink bottom part, and high ink dispersibility was observed. Fig. 5 shows XRD measurement result. By XRD measurement, regarding the resultant catalyst (4), a peak corresponding to (110) plane distance of 3.2478 Å appeared.

### 2. Production of fuel cell electrode

By the same method as in Example 1-1 except that the catalyst (1-1) was replaced with the catalyst (3), a fuel cell electrode (3) was obtained.

By the same method as in Example 1-1 except that the fuel cell electrode (1-1) was replaced with the fuel cell electrode (3), catalytic performance was evaluated.

Fig. 6 shows current-potential curve obtained in the above measurement.

The catalyst (3) prepared in Example 3 had an oxygen reduction onset potential of 0.95 V (vs. RHE) and an oxygen reduction current density at 0.75 V (vs. RHE) of 0.75 mA/cm², and had high catalytic performance.

### 3. Production of fuel cell membrane electrode assembly and Evaluation of its power generation property

### (1) Preparation of ink

0.2 g of the catalyst (3) prepared above was mixed with 0.05 g of carbon black (ketjen black EC300J, manufactured by LION Corporation) as electron conductive material, and to the mixture, 0.75 g of an aqueous solution containing 0.142 g of proton conductive material (NAFION (registered trade mark)) (20% NAFION (registered trade mark) aqueous solution, manufactured by Wako Pure Chemical Industries, Ltd.) was added. The resultant mixture was subjected to mixing procedure using "THINKY MIXER" (manufactured by THINKY) for 15 minutes, whereby a cathode ink (1) was prepared.

### (2) Preparation of electrode having fuel cell catalyst layer

A gas diffusion layer (carbon paper (TGP-H-060, manufactured by Toray Industries, Inc.) was immersed in acetone for 30 seconds and degreased, thereafter dried, and then immersed in an aqueous 10% PTFE solution for 30 seconds.

The immersed product was dried at room temperature, and was heated at 350°C for 1 hour, to provide a water-repellent gas diffusion layer having PTFE dispersed in the carbon paper (hereinafter also referred to as "GDL").

The above GDL was formed into the size of 5 cm × 5 cm, and the surface thereof was coated with the above cathode ink (1) using a bar coater at 80°C, thereby preparing an electrode having on the GDL surface a cathode catalyst layer (1), in which the total amount of the catalyst (3) and the carbon black per unit area was 2.5 mg/cm² (hereinafter also referred to as the "cathode (1)") .

### (3) Preparation of fuel cell membrane electrode assembly

As an electrolyte membrane, a cathode, and an anode, NAFION (registered trademark) membrane (NR-212, manufactured by DuPont), the cathode (1), and the electrode having the anode catalyst layer (1) on the GDL surface prepared in Anode Preparation Example 1 (hereinafter also referred to as the "anode (1)") were prepared, respectively.

A fuel cell membrane electrode assembly (hereinafter also referred to as "MEA") in which the electrolyte membrane was interposed between the cathode and the anode was prepared in such a manner as described below.

First, the electrolyte membrane was held by the cathode (1) and the anode (1); and these were thermally contact bonded with a hot pressing machine at a temperature of 140°C and at a pressure of 3 MPa for 6 minutes, so that the cathode catalyst layer (1) and the anode catalyst layer (1) would adhere to the electrolyte membrane. As a result, MEA (1) was prepared.

### (4) Preparation of single cell

As illustrated in Fig. 22, the MEA (1) was held by two sealing materials (gaskets), two separators each having a gas flow passage, two collectors and two rubber heaters, and fixed and secured with a bolt such that the pressure of contacted surface would be a prescribed value (4 N), to thereby prepare a single cell (cell area: 5 cm²) of a polymer electrolyte fuel cell (hereinafter also referred to as the "single cell (1) ") .

### (5) Evaluation of power generation property (Measurement of catalytic performance)

The temperature of the single cell (1), the temperature of an anode humidifier, and the temperature of a cathode humidifier were set to 80°C, 80°C and 80°C, respectively. To the anode side, hydrogen was supplied as a fuel at a flow rate of 0.1 L/min, and to the cathode side, oxygen was supplied as an oxidizing agent at a flow rate of 0.1 L/min; and while applying a back pressure of 300 kPa to both sides, in the single cell (1), at 0.1 A/cm², a constant current load measurement test was performed.

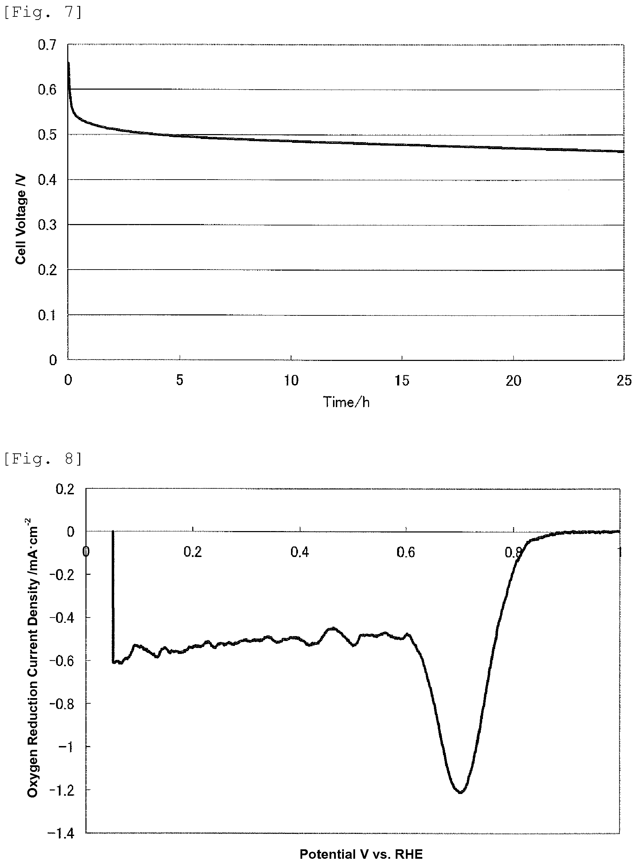

The measurement result is shown in Fig. 7. It is shown that the higher the cell voltage is, the higher the catalytic performance in MEA is, and that the smaller the value of the slope of voltage drop over time Δ (mV/h) is, the higher the durability of the catalyst is. The slope of voltage drop Δ was determined by linear approximation using least square method of curves of 5 hours after the start of the measurement. The slope of voltage drop in the single cell (1) was 1.2 mV/h, and catalyst durability was verified to be high.

### [Example 4]

### 1. Production of catalyst

9.37 g of titanium tetraisopropoxide (manufactured by Junsei Chemical Co., Ltd.) as a transition metal M1-containing compound, 1.40 g of aluminum triisopropoxide (manufactured by Wako Pure Chemical Industries, Ltd.) and 5.12 g of acetylacetone (manufactured by Junsei Chemical Co., Ltd.) were added to a solution of 32 mL of acetic acid (manufactured by Wako Pure Chemical Industries, Ltd.), and the resultant solution was stirred at room temperature, to prepare a transition metal M1-containing mixture solution. On the other hand, 10.0 g of glycine (manufactured by Wako Pure Chemical Industries, Ltd.) as a nitrogen-containing organic compound and 0.582 g of iron acetate (manufactured by Aldrich) as an iron group element M2-containing compound were added to 120 mL of pure water, and by stirring at room temperature, were completely dissolved, to prepare a mixture solution that contained a nitrogen-containing organic compound. The transition metal M1-containing mixture solution was slowly added to the mixture solution that contained a nitrogen-containing organic compound, to provide a transparent catalyst precursor solution. The catalyst precursor solution was heated with a rotary evaporator in a nitrogen atmosphere under reduced pressure with the temperature of a water bath set at about 60°C, and thereby the solvent was slowly evaporated. The solvent was completely evaporated and the resultant solid residue was finely and homogenously crushed with a mortar, to provide a powder.

By using this powder, and by the same method as in Example 1-1 except that the calcining temperature was 1000°C, a catalyst (4) was synthesized. BET specific surface area, elemental analysis result and ink dispersibility evaluation of this catalyst are indicated in Table 1. In the catalyst (4), no grains were seen at the ink bottom part, and high ink dispersibility was observed.

### 2. Production of fuel cell electrode

By the same method as in Example 1-1 except that the catalyst (1-1) was replaced with the catalyst (4), a fuel cell electrode (4) was obtained.

By the same method as in Example 1-1 except that the fuel cell electrode (1-1) was replaced with the fuel cell electrode (4), catalytic performance was evaluated.

Fig. 8 shows current-potential curve obtained in the above measurement.

The catalyst (4) prepared in Example 4 had an oxygen reduction onset potential of 0.95 V (vs. RHE) and an oxygen reduction current density at 0.75 V (vs. RHE) of 0.90 mA/cm², and had high catalytic performance.

### [Example 5]

4.685 g of titanium tetraisopropoxide (manufactured by Junsei Chemical Co., Ltd.) as a transition metal M1-containing compound, 4.212 g of aluminum triisopropoxide (manufactured by Wako Pure Chemical Industries, Ltd.) and 5.12 g of acetylacetone (manufactured by Junsei Chemical Co., Ltd.) were added to a solution of 32 mL of acetic acid (manufactured by Wako Pure Chemical Industries, Ltd.), and the resultant solution was stirred at room temperature, to prepare a transition metal M1-containing mixture solution. On the other hand, 10.0 g of glycine (manufactured by Wako Pure Chemical Industries, Ltd.) as a nitrogen-containing organic compound and 0.582 g of iron acetate (manufactured by Aldrich) as an iron group element M2-containing compound were added to 120 mL of pure water, and by stirring at room temperature, were completely dissolved, to prepare a mixture solution that contained a nitrogen-containing organic compound. The transition metal M1-containing mixture solution was slowly added to the mixture solution that contained a nitrogen-containing organic compound, to provide a transparent catalyst precursor solution. The catalyst precursor solution was heated and stirred with a rotary evaporator in a nitrogen atmosphere under reduced pressure with the temperature of a water bath set at about 60°C, and thereby the solvent was slowly evaporated. The solvent was completely evaporated and the resultant solid residue was finely and homogenously crushed with a mortar, to provide a powder.

By using this powder, and by the same method as in Example 1-1 except that the calcining temperature was 1000°C, a catalyst (5) was synthesized. BET specific surface area, elemental analysis result and ink dispersibility evaluation of this catalyst are indicated in Table 1. In the catalyst (5), no precipitates were seen at the ink bottom part, and high ink dispersibility was observed.

### 2. Production of fuel cell electrode

By the same method as in Example 1-1 except that the catalyst (1-1) was replaced with the catalyst (5), a fuel cell electrode (5) was obtained.

By the same method as in Example 1-1 except that the fuel cell electrode (1-1) was replaced with the fuel cell electrode (5), catalytic performance was evaluated.

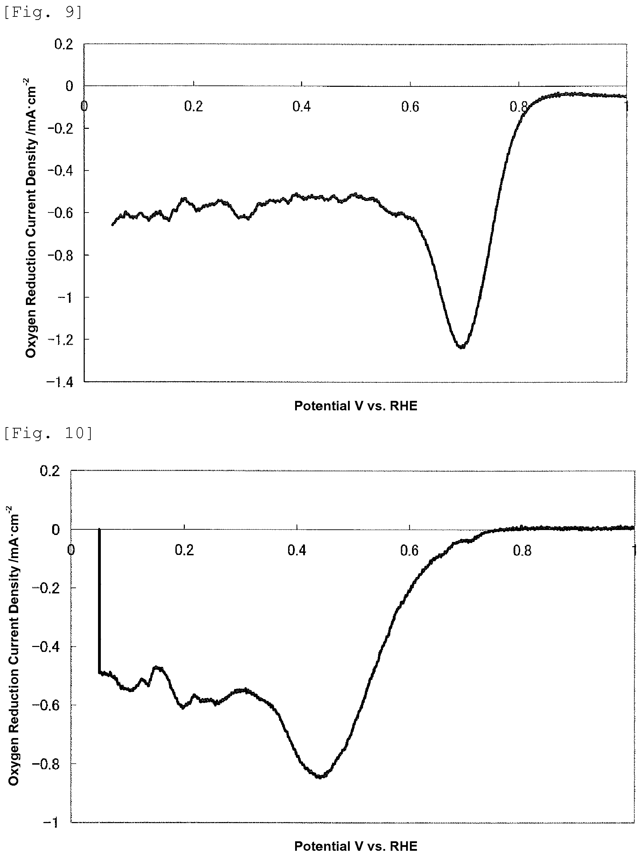

Fig. 9 shows current-potential curve obtained in the above measurement.

The catalyst (5) prepared in Example 5 had an oxygen reduction onset potential of 0.87 V (vs. RHE) and an oxygen reduction current density at 0.75 V (vs. RHE) of 0.66 mA/cm², and had high catalytic performance.

### [Reference Example 1]

### 1. Production of catalyst

9.37 g of titanium tetraisopropoxide (manufactured by Junsei Chemical Co., Ltd.) as a transition metal M1-containing compound, 0.351 g of aluminum triisopropoxide (manufactured by Wako Pure Chemical Industries, Ltd.) and 5.12 g of acetylacetone (manufactured by Junsei Chemical Co., Ltd.) were added to a solution of 32 mL of acetic acid (manufactured by Wako Pure Chemical Industries, Ltd.), and the resultant solution was stirred at room temperature, to prepare a transition metal M1-containing mixture solution. On the other hand, 10.0 g of glycine (manufactured by Wako Pure Chemical Industries, Ltd.) as a nitrogen-containing organic compound was added to 120 mL of pure water, and by stirring at room temperature, were completely dissolved, to prepare a mixture solution that contained a nitrogen-containing organic compound. The transition metal M1-containing mixture solution was slowly added to the mixture solution that contained a nitrogen-containing organic compound, to provide a transparent catalyst precursor solution. The catalyst precursor solution was heated and stirred with a rotary evaporator in a nitrogen atmosphere under reduced pressure with the temperature of a water bath set at about 60°C, and thereby the solvent was slowly evaporated. The solvent was completely evaporated and the resultant solid residue was finely and homogenously crushed with a mortar, to provide a powder.

By using this powder, and by the same method as in Example 1-1 except that the calcining temperature was 1000°C, a catalyst (6) was synthesized. BET specific surface area, elemental analysis result and ink dispersibility evaluation of this catalyst are indicated in Table 1. In the catalyst (6), high ink dispersibility was observed.

### 2. Production of fuel cell electrode

By the same method as in Example 1-1 except that the catalyst (1-1) was replaced with the catalyst (6), a fuel cell electrode (6) was obtained.

By the same method as in Example 1-1 except that the fuel cell electrode (1-1) was replaced with the fuel cell electrode (6), catalytic performance was evaluated.

Fig. 10 shows current-potential curve obtained in the above measurement.

The catalyst (6) prepared in Reference Example 1 had an oxygen reduction onset potential of 0.76 V (vs. RHE) and an oxygen reduction current density at 0.6 V (vs. RHE) of 0.21 mA/cm².

### 3. Production of fuel cell membrane electrode assembly and Evaluation of its power generation property

By the same method as in Example 3 except that the catalyst (3) was replaced with the catalyst (6), a fuel cell membrane electrode assembly (hereinafter also referred to as "MEA (2)") was prepared. Then, by the same method as in Example 3 except that the MEA (1) was replaced with the MEA (2), a single cell of a polymer electrolyte fuel cell (hereinafter also referred to as the "single cell (2)") was prepared.

By the same method as in Example 3 except that the single cell (1) was replaced with the single cell (2), constant current load measurement test was performed.

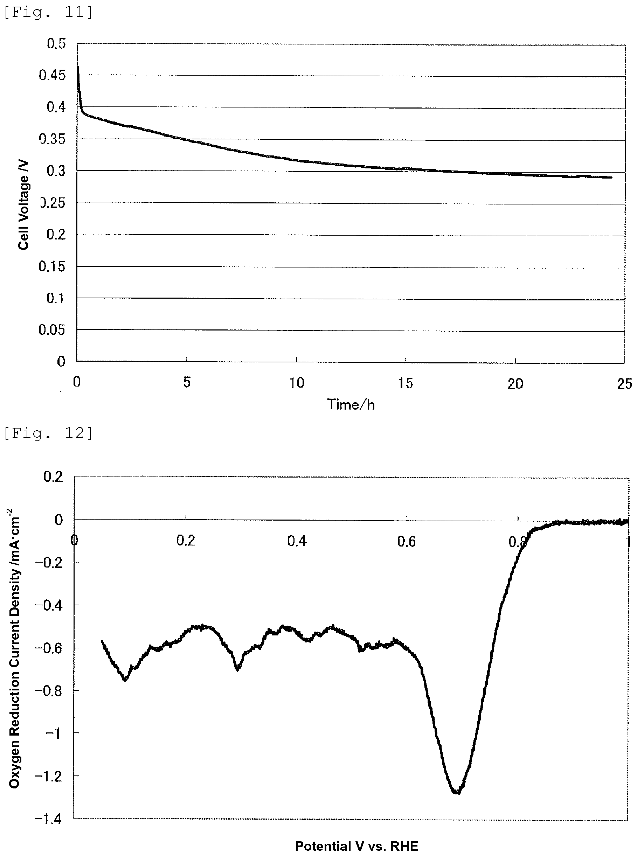

The measurement result is shown in Fig. 11. It is shown that the higher the cell voltage is, the higher the catalytic performance in MEA is, and that the smaller the value of the slope of voltage drop over time Δ(mV/h) is, the higher the durability of the catalyst is. The slope of voltage drop Δ in the single cell (2) was 1.6 mV/h, and catalyst durability was verified to be high.

### [Example 6] (Reference only)

### 1. Production of catalyst

9.37 g of titanium tetraisopropoxide (manufactured by Junsei Chemical Co., Ltd.) as a transition metal M1-containing compound, 0.91 ml of triisopropyl borate (manufactured by Aldrich), and 5.12 g of acetylacetone (manufactured by Junsei Chemical Co., Ltd.) were added to a solution of 32 mL of acetic acid (manufactured by Wako Pure Chemical Industries, Ltd.), and the resultant solution was stirred at room temperature, to prepare a transition metal M1-containing mixture solution. On the other hand, 10.0 g of glycine (manufactured by Wako Pure Chemical Industries, Ltd.) as a nitrogen-containing organic compound and 0.582 g of iron acetate (manufactured by Aldrich) as an iron group element M2-containing compound were added to 120 mL of pure water, and by stirring at room temperature, were completely dissolved, to prepare a mixture solution that contained a nitrogen-containing organic compound. The transition metal M1-containing mixture solution was slowly added to the mixture solution that contained a nitrogen-containing organic compound, to provide a transparent catalyst precursor solution. The catalyst precursor solution was heated and stirred with a rotary evaporator in a nitrogen atmosphere under reduced pressure with the temperature of a water bath set at about 60°C, and thereby the solvent was slowly evaporated. The solvent was completely evaporated and the resultant solid residue was finely and homogenously crushed with a mortar, to provide a powder.

By using this powder, and by the same method as in Example 1-1 except that the calcining temperature was 1000°C, a catalyst (7) was synthesized. BET specific surface area, elemental analysis result and ink dispersibility evaluation of this catalyst are indicated in Table 1. In the catalyst (7), no precipitates were seen at the ink bottom part, and high ink dispersibility was observed.

### 2. Production of fuel cell electrode

By the same method as in Example 1-1 except that the catalyst (1-1) was replaced with the catalyst (7), a fuel cell electrode (7) was obtained.

By the same method as in Example 1-1 except that the fuel cell electrode (1-1) was replaced with the fuel cell electrode (7), catalytic performance was evaluated.

Fig. 12 shows current-potential curve obtained in the above measurement.

The catalyst (7) prepared in Example 6 had an oxygen reduction onset potential of 0.95 V (vs. RHE) and an oxygen reduction current density at 0.75 V (vs. RHE) of 0.67 mA/cm², and had high catalytic performance.

### [Example 7]

### 1. Production of catalyst

10.41 g of niobium ethoxide (manufactured by Junsei Chemical Co., Ltd.) as a transition metal M1-containing compound, 0.7018 g of aluminum triisopropoxide (manufactured by Wako Pure Chemical Industries, Ltd.) and 5.12 g of acetylacetone (manufactured by Junsei Chemical Co., Ltd.) were added to a solution of 32 mL of acetic acid (manufactured by Wako Pure Chemical Industries, Ltd.), and the resultant solution was stirred at room temperature, to prepare a transition metal M1-containing mixture solution. On the other hand, 10.0 g of glycine (manufactured by Wako Pure Chemical Industries, Ltd.) as a nitrogen-containing organic compound and 0.582 g of iron acetate (manufactured by Aldrich) as an iron group element M2-containing compound were added to 120 mL of pure water, and by stirring at room temperature, were completely dissolved, to prepare a mixture solution that contained a nitrogen-containing organic compound. The transition metal M1-containing mixture solution was slowly added to the mixture solution that contained a nitrogen-containing organic compound, to provide a transparent catalyst precursor solution. The catalyst precursor solution was heated with a rotary evaporator in a nitrogen atmosphere under reduced pressure with the temperature of a water bath set at about 60°C, and thereby the solvent was slowly evaporated. The solvent was completely evaporated and the resultant solid residue was finely and homogenously crushed with a mortar, to provide a powder.

By using this powder, and by the same method as in Example 1-1 except that the calcining temperature was 1000°C, a catalyst (8) was synthesized. BET specific surface area, elemental analysis result and ink dispersibility evaluation of this catalyst are indicated in Table 1. In the catalyst (8), no precipitates were seen at the ink bottom part, and high ink dispersibility was observed.

### 2. Production of fuel cell electrode

By the same method as in Example 1-1 except that the catalyst (1-1) was replaced with the catalyst (8), a fuel cell electrode (8) was obtained.

By the same method as in Example 1-1 except that the fuel cell electrode (1-1) was replaced with the fuel cell electrode (8), catalytic performance was evaluated.

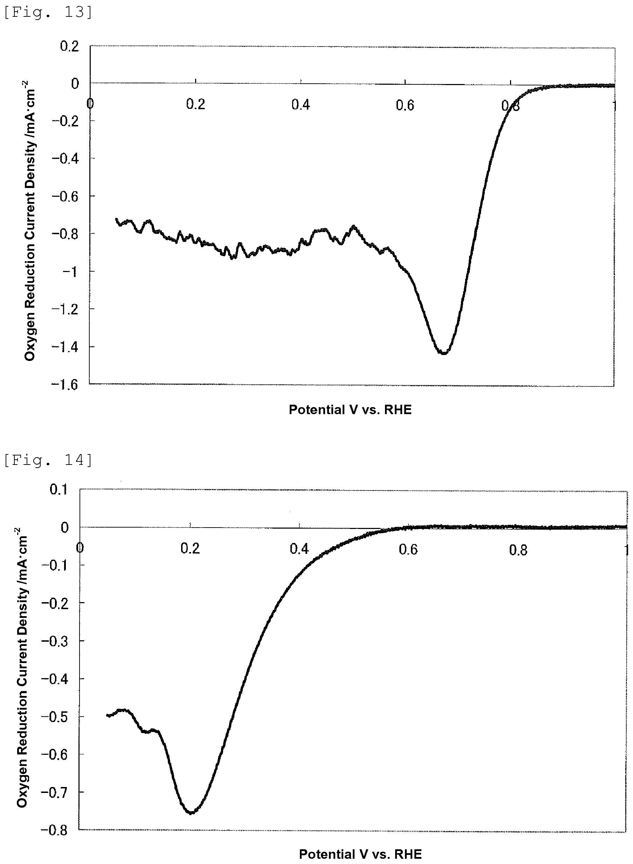

Fig. 13 shows current-potential curve obtained in the above measurement.

The catalyst (8) prepared in Example 7 had an oxygen reduction onset potential of 0.98 V (vs. RHE) and an oxygen reduction current density at 0.75 V (vs. RHE) of 0.57 mA/cm², and had high catalytic performance.

### [Comparative Example 1]

### 1. Preparation of catalyst

By the same method as in Example 1-1 except that the calcining temperature was 450°C, a catalyst (9) was synthesized. BET specific surface area, elemental analysis result and ink dispersibility evaluation of this catalyst are indicated in Table 1. In the catalyst (9), no precipitates were seen at the ink bottom part, and high ink dispersibility was observed.

### 2. Production of fuel cell electrode

By the same method as in Example 1-1 except that the catalyst (1-1) was replaced with the catalyst (9), a fuel cell electrode (9) was obtained.

By the same method as in Example 1-1 except that the fuel cell electrode (1-1) was replaced with the fuel cell electrode (9), catalytic performance was evaluated.

Fig. 14 shows current-potential curve obtained in the above measurement.

The catalyst (9) prepared in Comparative Example 1 had an oxygen reduction onset potential of 0.59 V (vs. RHE), and had low catalytic performance.

### [Comparative Example 2]

### 1. Preparation of catalyst

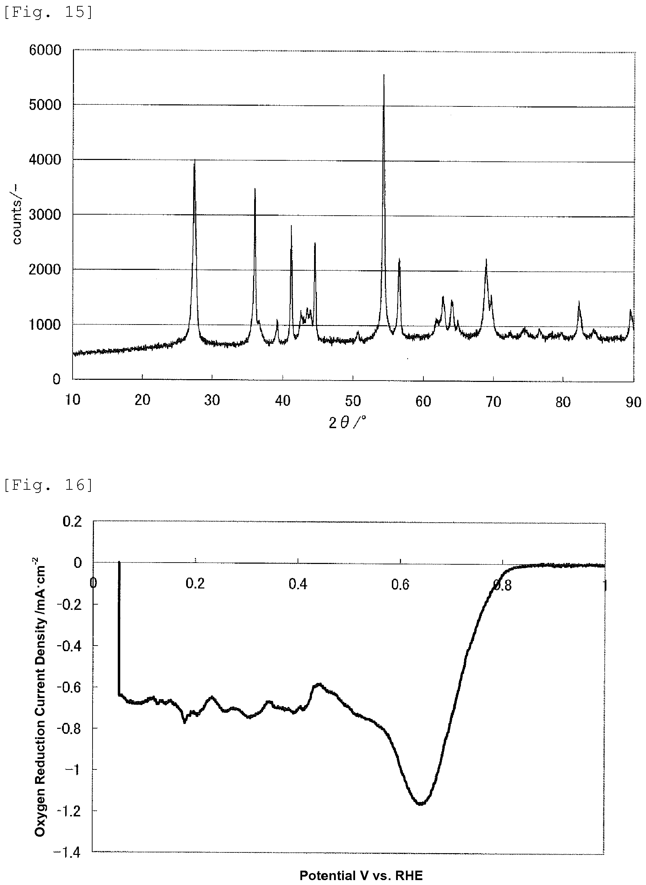

By the same method as in Example 3 except that aluminum triisopropoxide was not added, a catalyst (10) was synthesized. BET specific surface area, elemental analysis result and ink dispersibility evaluation of this catalyst are indicated in Table 1. In the catalyst (10), no precipitates were seen at the ink bottom part, and high ink dispersibility was observed. Fig. 15 shows XRD measurement result. By XRD measurement, it was found that the resultant catalyst (10) had (110) plane distance of 3.2483 Å.

### 2. Production of fuel cell electrode

By the same method as in Example 1-1 except that the catalyst (1-1) was replaced with the catalyst (10), a fuel cell electrode (10) was obtained.

By the same method as in Example 1-1 except that the fuel cell electrode (1-1) was replaced with the fuel cell electrode (10), catalytic performance was evaluated.

Fig. 16 shows current-potential curve obtained in the above measurement.

The catalyst (10) prepared in Comparative Example 2 had an oxygen reduction onset potential of 0.88 V (vs. RHE), and an oxygen reduction current density at 0.75 V (vs. RHE) of 0.30 mA/cm², and had low catalytic performance.

### 3. Production of fuel cell membrane electrode assembly and Evaluation of its power generation property

By the same method as in Example 3 except that the catalyst (3) was replaced with the catalyst (10), a fuel cell membrane electrode assembly (hereinafter also referred to as "MEA (3)") was prepared. Then, by the same method as in Example 3 except that the MEA (1) was replaced with the MEA (3), a single cell of a polymer electrolyte fuel cell (hereinafter also referred to as the "single cell (3)") was prepared.

By the same method as in Example 3 except that the single cell (1) was replaced with the single cell (3), constant current load measurement test was performed.

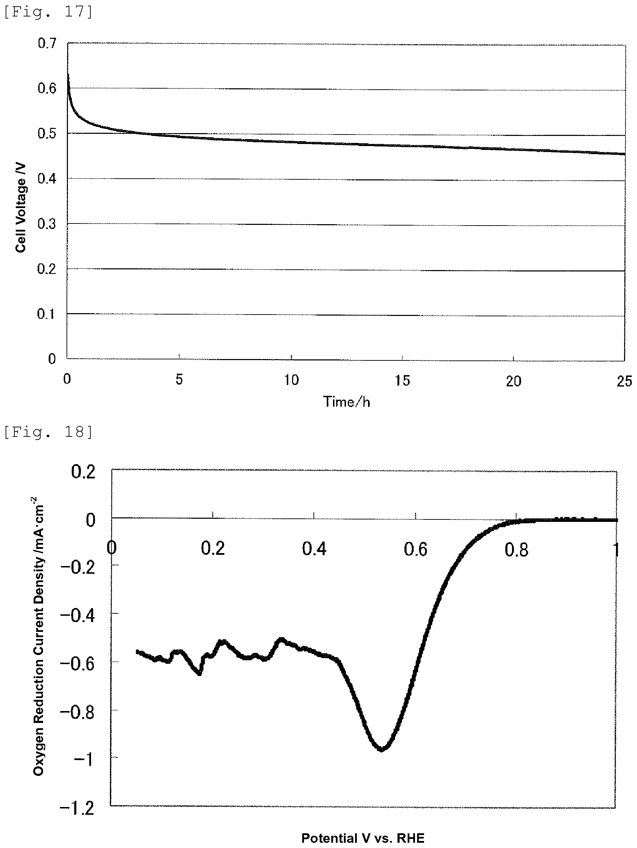

The measurement result is shown in Fig. 17. It is shown that the higher the cell voltage is, the higher the catalytic performance in MEA is, and that the smaller the value of the slope of voltage drop over time Δ (mV/h) is, the higher the durability of the catalyst is. The slope of voltage drop in the single cell (3) was 1.7 mV/h.

### [Comparative Example 3]

### 1. Preparation of catalyst

5.10 g (85 mmol) of titanium carbide (TiC), 0.80 g (10 mmol) of titanium oxide (TiO2) and 0.31g (5 mmol) of titanium nitride (TiN) were sufficiently mixed with one another, and the mixture was heated at 1800°C for 3 hours under nitrogen atmosphere, whereby 5.73 g of titanium carbonitride was obtained. The resultant titanium carbonitride, which was a sintered product, was crushed with an automatic mortar.

The resultant titanium carbonitride in an amount of 298 mg was heated in a tubular furnace at 1000°C for 10 hours while flowing a nitrogen gas containing 1% by volume of an oxygen gas and 4% by volume of a hydrogen gas, whereby a sintered product containing titanium (hereinafter also referred to as the "catalyst (11)") in an amount of 393 mg was obtained.

### 2. Production of fuel cell electrode

By the same method as in Example 1-1 except that the catalyst (1-1) was replaced with the catalyst (11), a fuel cell electrode (11) was obtained.

By the same method as in Example 1-1 except that the fuel cell electrode (1-1) was replaced with the fuel cell electrode (11), catalytic performance was evaluated.

Fig. 18 shows current-potential curve obtained in the above measurement.

The catalyst (11) prepared in Comparative Example 3 had an oxygen reduction onset potential of 0.83 V (vs. RHE) and an oxygen reduction current density at 0.75 V (vs. RHE) of 0.04 mA/cm², and had low catalytic performance.

### [Comparative Example 4]

### Aluminum addition high-temperature solid phase synthesis

### 1. Preparation of catalyst

2.55 g (42.5 mmol) of titanium carbide (TiC), 0.30 g (5.0 mmol) of titanium nitride (TiN) and 0.13 g (1.25 mmol) of aluminum oxide (Al₂O₃) were sufficiently mixed with one another, and the mixture was heated at 1600°C for 3 hours in a nitrogen gas, whereby 2.72 g of a sintered product containing aluminum and titanium was obtained. This sintered carbonitride was crushed with a ball mill, to obtain powder.

The resultant powder in an amount of 1.02 g was heated in a tubular furnace at 1000°C for 1 hour, while flowing an argon gas containing 1% volume of an oxygen gas, whereby a sintered product containing aluminum and titanium (hereinafter also referred to as the "catalyst (12)") in an amount of 1.11 g was obtained.

### 2. Production of fuel cell electrode

By the same method as in Example 1-1 except that the catalyst (1-1) was replaced with the catalyst (12), a fuel cell electrode (12) was obtained.

By the same method as in Example 1-1 except that the fuel cell electrode (1-1) was replaced with the fuel cell electrode (12), catalytic performance was evaluated.

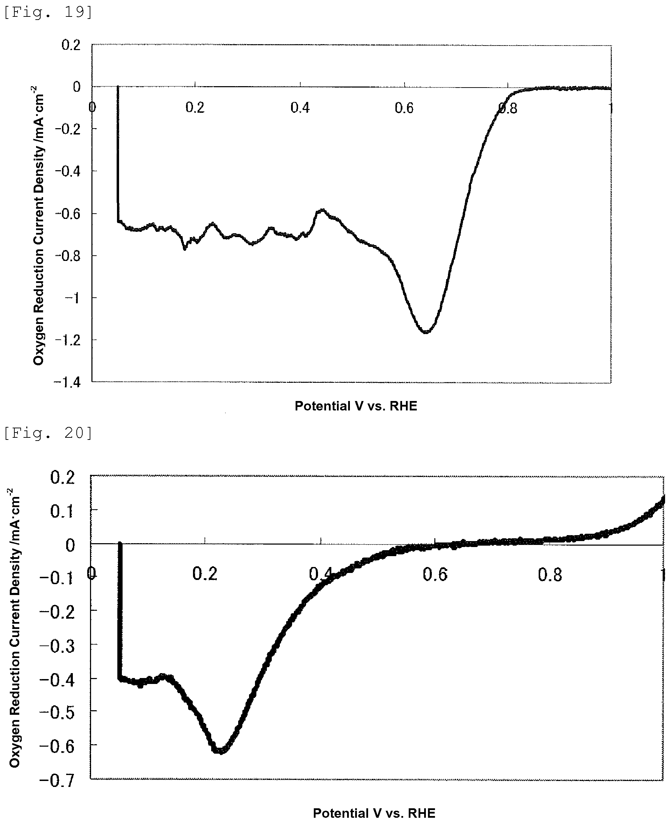

Fig. 19 shows current-potential curve obtained in the above measurement.

The catalyst (12) prepared in Comparative Example 4 had an oxygen reduction onset potential of 0.76 V (vs. RHE) and an oxygen reduction current density at 0.75 V (vs. RHE) of 0.01 mA/cm², and had low catalytic performance.

### [Comparative Example 5]

### 1. Preparation of catalyst

2 g of titanium oxide (anatase-type, 100 m²/g), which is a transition metal M1-containing compound, was sufficiently mixed with 0.75 g of carbon black (VULCAN XC-72, Cabot Corporation) in a mortar. The mixture was introduced to a tubular furnace, and was heated to 1700°C under the atmosphere of a nitrogen gas containing 4% by volume of a hydrogen gas at a heating rate of 10°C/min, and was held at 1700°C for 3 hours, and then allowed to cool, to provide a powdery catalyst (hereinafter, also referred to as the "catalyst (13)").

### 2. Production of fuel cell electrode

By the same method as in Example 1-1 except that the catalyst (1-1) was replaced with the catalyst (13), a fuel cell electrode (13) was obtained.

By the same method as in Example 1-1 except that the fuel cell electrode (1-1) was replaced with the fuel cell electrode (13), catalytic performance was evaluated.

Fig. 20 shows current-potential curve obtained in the above measurement.

The catalyst (13) prepared in Comparative Example 5 had an oxygen reduction onset potential of 0.59 V (vs. RHE), and had low catalytic performance.

### [Comparative Example 6]

### 1. Preparation of catalyst

Titanium oxide (anatase-type, 100 m²/g), which is a transition metal M1-containing compound, was introduced to a tubular furnace, and was heated to 900°C under the atmosphere of a nitrogen gas containing 4% by volume of a hydrogen gas at a heating rate of 10°C/min, and was held at 900°C for 1 hour, and then allowed to cool, to provide a powdery catalyst (hereinafter, also referred to as the "catalyst 11").

### 2. Production of fuel cell electrode

By the same method as in Example 1-1 except that the catalyst (1-1) was replaced with the catalyst (14), a fuel cell electrode (14) was obtained.

By the same method as in Example 1-1 except that the fuel cell electrode (1-1) was replaced with the fuel cell electrode (14), catalytic performance was evaluated.

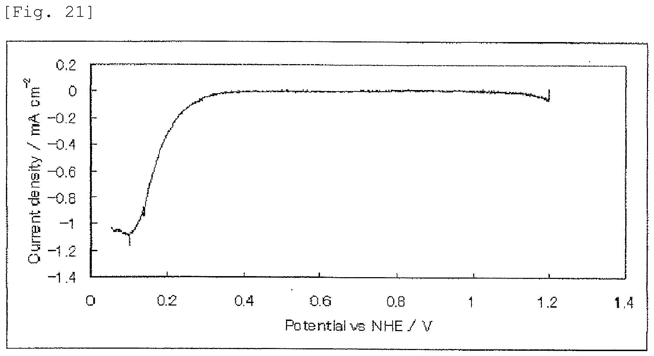

Fig. 21 shows current-potential curve obtained in the above measurement.

The catalyst (14) prepared in Comparative Example 6 had an oxygen reduction onset potential of 0.35 V (vs. RHE), and had low catalytic performance.
[Table 1]

**Table 1**

| | M1 | M2 | M3 | M3 ratio* | Thermal treatment temperature (°C) | Holding time | BET specific surface area (m²/g) | Composition | Dispersibility | Oxygen Reduction Current Density (mA/cm²)** | Slope of Voltage Drop (mV/h) |
|---|---|---|---|---|---|---|---|---|---|---|---|
| Example 1-1 | Ti | Fe | Al | 0.1 | 890 | 15 min | 247 | Ti_{0.87}Fe_{0.06}Al_{0.07}C_{2.75}N_{0.08}O_{1.31} | Good | 1.05 | - |
| Example 1-2 | Ti | Fe | Al | 0.1 | 1000 | 15 min | 269 | Ti_{0.83}Fe_{0.08}Al_{0.09}C_{2.63}N_{0.16}O_{1.53} | Good | 1.00 | - |
| Example 1-3 | Ti | Fe | Al | 0.1 | 1050 | 15 min | 290 | Ti_{0.86}Fe_{0.07}Al_{0.07}C_{2.10}N_{0.15}O_{1.01} | Good | 0.72 | - |
| Example 2 | Ti | Fe | Al | 0.01 | 1000 | 15 min | 262 | Ti_{0.91}Fe_{0.08}Al_{0.01}C_{2.21}N_{0.10}O_{1.15} | Good | 0.83 | - |
| Example 3 | Ti | Fe | Al | 0.025 | 1000 | 15 min | 275 | Ti_{0.99}Fe_{0.08}Al_{0.02}C_{2.21}N_{0.12}O_{1.14} | Good | 0.75 | 1.2 |
| Example 4 | Ti | Fe | Al | 0.2 | 1000 | 15 min | 268 | Ti_{0.82}Fe_{0.07}Al_{0.11}C_{1.97}N_{0.16}O_{1.22} | Good | 0.90 | - |
| Example 5 | Ti | Fe | Al | 1.5 | 1000 | 15 min | 322 | Ti_{0.39}Fe_{0.03}Al_{0.58}C_{1.93}N_{0.14}O_{1.19} | Good | 0.66 | - |
| Ref. Ex. 1 | Ti | - | Al | 0.1 | 1000 | 15 min | 304 | Ti_{0.93}Al_{0.07}C_{1.98}N_{0.06}O_{0.83} | Good | 0.21 | 1.6 |
| Example 6*** | Ti | Fe | B | 0.1 | 1000 | 15 min | 257 | Ti_{0.86}Fe_{0.07}B_{0.07}C_{1.91}N_{0.15}O_{1.19} | Good | 0.67 | - |
| Example 7 | Nb | Fe | Al | 0.1 | 1000 | 15 min | 214 | Nb_{0.89}Fe_{0.06}Al_{0.05}C_{1.13}N_{0.10}O_{0.96} | Good | 0.57 | - |
| Comp.Ex. 1 | Ti | Fe | Al | 0.1 | 450 | 15 min | 1.1 | Ti_{0.87}Fe_{0.08}Al_{0.05}C_{6.49}N_{1.95}O_{4.01} | Poor | - | - |
| Comp.Ex. 2 | Ti | Fe | - | - | 1000 | 15 min | 235 | Ti_{0.93}Fe_{0.07}C_{1.98}N_{0.06}O_{0.83} | Good | 0.30 | 1.7 |
| Comp.Ex. 3 | Ti | - | - | - | 1800 | 10 hr | 11 | TiC_{0.10}N_{0.01}O_{1.85} | Poor | 0.04 | - |
| Comp.Ex. 4 | Ti | - | Al | 0.025 | 1000 | 2.5 hr | 69.2 | Ti_{0.99}Al_{0.01}C_{2.45}N_{0.01}O_{1.91} | Poor | 0.01 | - |
| Comp.Ex. 5 | Ti | - | - | - | 1700 | 3 h | 1.8 | - | Poor | - | - |
| Comp.Ex. 6 | Ti | - | - | - | 900 | 1 h | 9.4 | - | Poor | - | - |

| | | | | | | | | | | | |
|---|---|---|---|---|---|---|---|---|---|---|---|
| *: Mass of M3/Mass of M1 **: value at 0.75 V, but in Ref. Ex. 1 value at 0.6V ***: Reference only | | | | | | | | | | | |

### REFERENCE SIGNS LIST

- 11: membrane electrode assembly (MEA)
- 12: gasket
- 13: separator
- 14: collector
- 15: rubber heater

## Claims

1. A fuel cell electrode catalyst comprising, at least:
M1 that is at least one element selected from the group consisting of titanium and niobium;
M2 that is iron;
M3 that is aluminum;
carbon;
nitrogen; and
oxygen, as constitutional elements, wherein
when the atomic ratios of the elements (M1: M2: M3: carbon: nitrogen: oxygen) are represented by a:b:c:x:y:z, 0<a<1, 0<b≤0.5, 0<c<1, 0<x≤6, 0<y≤2, 0<z≤3 and a+b+c=1 are satisfied, and wherein the BET specific surface area is 100 m²/g or more.

2. The fuel cell electrode catalyst according to Claim 1, wherein the "x" is 0.15 to 5.

3. The fuel cell electrode catalyst according to Claim 1 or 2, wherein the "y" is 0.01 to 1.5.

4. The fuel cell electrode catalyst according to any one of Claims 1 to 3, wherein the "z" is 0.1 to 2.6.

5. A process for producing a fuel cell electrode catalyst according to any one of claims 1 to 4, comprising:
Step 1 of mixing, at least, a compound containing M1 that is at least one element selected from 3 to 7 group elements; a compound containing M2 that is at least one element selected from iron group elements; a compound containing M3 that is at least one element selected from 13 group elements; a nitrogen-containing organic compound; and a solvent, to provide a catalyst precursor solution,
Step 2 of removing the solvent from the catalyst precursor solution to obtain a sold residue, and
Step 3 of thermally treating the solid residue obtained in Step 2 at a temperature of 500 to 1200°C, to provide an electrode catalyst.

6. The process for producing a fuel cell electrode catalyst according to Claim 5, wherein the M1-containing compound is at least one compound selected from the group consisting of metal nitrates, metal organic acid salts, metal oxychlorides, metal alkoxides, metal halides, metal perchlorates and metal hypochlorites.

7. The process for producing a fuel cell electrode catalyst according to Claim 5 or 6, wherein the nitrogen-containing organic compound has, in the molecule, at least one kind selected from amino group, nitrile group, imide group, imine group, nitro group, amide group, azide group, aziridine group, azo group, isocyanate group, isothiocyanate group, oxyme group, diazo group, nitroso group, pyrrole ring, porphyrin ring, imidazole ring, pyridine ring, pyrimidine ring and pyrazine ring.

8. The process for producing a fuel cell electrode catalyst according to any one of Claims 5 to 7, wherein the nitrogen-containing organic compound has, in the molecule, at least one group selected from hydroxyl group, carboxyl group, formyl group, halocarbonyl group, sulfonic acid group, phosphoric acid group, ketone group, ether group and ester group.

9. The process for producing a fuel cell electrode catalyst according to any one of Claims 5 to 8, wherein in Step 3, the solid residue is thermally treated in an atmosphere containing an argon gas, a helium gas or a nitrogen gas.

10. The process for producing a fuel cell electrode catalyst according to any one of Claims 5 to 8, wherein in Step 3, the solid residue is thermally treated in an atmosphere containing a hydrogen gas.

11. An ink comprising the fuel cell electrode catalyst according to any one of Claims 1 to 4.

12. A fuel cell catalyst layer comprising the fuel cell electrode catalyst according to any one of claims 1 to 4.

13. An electrode comprising a fuel cell catalyst layer and a gas diffusion layer, wherein the fuel cell catalyst layer is the fuel cell catalyst layer according to Claim 12.

14. A membrane electrode assembly comprising a cathode, an anode and an electrolyte membrane interposed between the cathode and the anode, wherein the cathode is the electrode according to Claim 13.

15. A polymer electrolyte fuel cell comprising the membrane electrode assembly according to Claim 14.

## Patentansprüche

1. Brennstoffzellenelektrodenkatalysator, der mindestens enthält:
M1, welches mindestens ein Element ist, das aus der aus Titan und Niob bestehenden Gruppe ausgewählt ist;
M2, welches Eisen ist;
M3, welches Aluminium ist;
Kohlenstoff;
Stickstoff; und
Sauerstoff als Konstitutionselemente, wobei, wenn die Atomverhältnisse der Elemente (M1: M2: M3: Kohlenstoff: Stickstoff: Sauerstoff) durch a:b:c:x:y:z dargestellt sind, 0<a<1, 0<b≤0,5, 0<c<1, 0<x≤6, 0<y≤2, 0<z≤3 und a+b+c=1 erfüllt sind, und die spezifische Oberfläche nach BET 100 m²/g oder mehr ist.

2. Brennstoffzellenelektrodenkatalysator nach Anspruch 1, wobei "x" 0,15 bis 5 ist.

3. Brennstoffzellenelektrodenkatalysator nach Anspruch 1 oder 2, wobei "y" 0,01 bis 1,5 ist.

4. Brennstoffzellenelektrodenkatalysator nach einem der Ansprüche 1 oder 3, wobei "z" 0,1 bis 2,6 ist.

5. Verfahren zum Herstellen eines Brennstoffzellenelektrodenkatalysators nach einem der Ansprüche 1 bis 4, welches umfasst:
Stufe 1, in der mindestens eine Verbindung, die M1 enthält, welches mindestens ein unter den Elementen der Gruppen 3 bis 7 ausgewähltes Element ist; eine Verbindung, die M2 enthält, welches mindestens ein unter den Elementen der Eisengruppe ausgewähltes Element ist; eine Verbindung, die M3 enthält, welches mindestens ein unter den Elementen der Gruppe 13 ausgewähltes Element ist; eine Stickstoff enthaltende organische Verbindung; und ein Lösungsmittel unter Bildung einer Katalysatorvorläuferlösung gemischt werden;
Stufe 2, in der das Lösungsmittel von der Katalysatorvorläuferlösung unter Bildung eines festen Restes entfernt wird, und
Stufe 3, in der der in Stufe 2 erhaltene feste Rest bei einer Temperatur von 500 bis 1200°C unter Bildung eines Elektrodenkatalysators thermisch behandelt wird.

6. Verfahren zum Herstellen eines Brennstoffzellenelektrodenkatalysators nach Anspruch 5, wobei die M1 enthaltende Verbindung mindestens eine Verbindung ist, die aus der Gruppe ausgewählt ist, die aus Metallnitraten, Metallsalzen organischer Säuren, Metalloxychloriden, Metallalkoxiden, Metallhalogeniden, Metallperchloraten und Metallhypochloriten besteht.

7. Verfahren zum Herstellen eines Brennstoffzellenelektrodenkatalysators nach Anspruch 5 oder 6, wobei die Stickstoff enthaltende organische Verbindung im Molekül mindestens ein Mitglied der Gruppe aufweist, die aus einer Amingruppe, Nitrilgruppe, Imidgruppe, Imingruppe, Nitrogruppe, Amidgruppe, Azidgruppe, Aziridingruppe, Azogruppe, Isocyanatgruppe, Isothiocyanatgruppe, Oxymgruppe, Diazogruppe, Nitrosogruppe, Pyrrolring, Porphyrinring, Imidazolring, Pyridinring, Pyrimidinring und Pyrazinring besteht.

8. Verfahren zum Herstellen eines Brennstoffzellenelektrodenkatalysators nach einem der Ansprüche 5 bis 7, wobei die Stickstoff enthaltende organische Verbindung im Molekül mindestens eine Gruppe enthält, die unter einer Hydroxygruppe, Carboxygruppe, Formylgruppe, Halocarbonylgruppe, Sulfonsäuregruppe, Phosphorsäuregruppe, Ketongruppe, Ethergruppe und Estergruppe ausgewählt ist.

9. Verfahren zum Herstellen eines Brennstoffzellenelektrodenkatalysators nach einem der Ansprüche 5 bis 8, wobei in Stufe 3 der feste Rest in einer Argongas, Heliumgas oder Stickstoffgas enthaltenden Atmosphäre thermisch behandelt wird.

10. Verfahren zum Herstellen eines Brennstoffzellenelektrodenkatalysators nach einem der Ansprüche 5 bis 8, wobei in Stufe 3 der feste Rest in einer Wasserstoffgas enthaltenden Atmosphäre thermisch behandelt wird.

11. Tinte, die den Brennstoffzellenelektrodenkatalysator nach einem der Ansprüche 1 bis 4 enthält.

12. Brennstoffzellenkatalysatorschicht, die den Brennstoffzellenelektrodenkatalysator nach einem der Ansprüche 1 bis 4 enthält.

13. Elektrode, die eine Brennstoffzellenkatalysatorschicht und eine Gasdiffusionsschicht umfasst, wobei die Brennstoffzellenkatalysatorschicht die Brennstoffzellenkatalysatorschicht nach Anspruch 12 ist.

14. Membranelektrodenanordnung, die eine Kathode, eine Anode und eine zwischen der Kathode und der Anode angebrachte Elektrolytmembran umfasst, wobei die Kathode die Elektrode nach Anspruch 13 ist.

15. Polymerelektrolytbrennstoffzelle, welche die Membranelektrodenanordnung nach Anspruch 14 umfasst.

## Revendications

1. Catalyseur d'électrode de pile à combustible comprenant, au moins:
M1 qui est au moins un élément choisi dans le groupe composé du titane et du niobium;
M2 qui est le fer;
M3 qui est l'aluminium;
du carbone;
de l'azote; et
de l'oxygène, en tant qu'éléments constitutifs, dans lequel
lorsque les rapports atomiques des éléments (M1:M2:M3:carbone:azote:oxygène) sont représentés par a:b:c:x:y:z, alors 0<a<1, 0<b≤0,5, 0<c<1, 0<x≤6, 0<y≤2, 0<z≤3 et a+b+c=1 sont satisfaites, et dans lequel la surface spécifique BET est de 100 m²/g ou plus.

2. Catalyseur d'électrode de pile à combustible selon la revendication 1, dans lequelle le "x" vaut 0,15 à 5.

3. Catalyseur d'électrode de pile à combustible selon la revendication 1 ou 2, dans lequel le "y" vaut 0,01 à 1,5.

4. Catalyseur d'électrode de pile à combustible selon l'une quelconque des revendications 1 à 3, dans lequel le "z" vaut 0,1 à 2,6.

5. Procédé de production d'un catalyseur d'électrode de pile à combustible selon l'une quelconque des revendications 1 à 4, comprenant:
étape 1: mélanger au moins un composé contenant M1 qui est au moins un élément choisi parmi les éléments des groupes 3 à 7; un composé contenant M2 qui est au moins un élément choisi parmi les éléments du groupe du fer; un composé contenant M3 qui est au moins un élément choisi parmi les éléments du groupe 13; un composé organique contenant de l'azote; et un solvant, pour obtenir une solution de précurseur de catalyseur,
étape 2: éliminer le solvant de la solution de précurseur de catalyseur, afin d'obtenir un résidu solide, et
étape 3: traiter thermiquement le résidu solide obtenu à l'étape 2 à une température de 500 à 1200°C, pour fournir un catalyseur d'électrode.

6. Procédé de production d'un catalyseur d'électrode de pile à combustible selon la revendication 5, dans lequel le composé contenant M1 est au moins un composé choisi parmi le groupe constitué de nitrates métalliques, de sels métalliques d'acides organiques, d'oxychlorures métalliques, d'alcoxydes métalliques, d'halogénures métalliques, de perchlorates métalliques et d'hypochlorites métalliques.

7. Procédé de production d'un catalyseur d'électrode de pile à combustible selon la revendication 5 ou 6, dans lequel le composé organique contenant de l'azote contient, dans la molécule, au moins un type choisi parmi un groupe aminé, un groupe nitrile, un groupe imide, un groupe imine, un groupe nitro, un groupe amide, un groupe azide, un groupe aziridine, un groupe azo, un groupe isocyanate, un groupe isothiocyanate, un groupe oxyme, un groupe diazo, un groupe nitroso, un anneau pyrrole, un anneau porphyrine, un anneau imidazole, un anneau pyridine, un anneau pyrimidine et un anneau pyrazine.

8. Procédé de production d'un catalyseur d'électrode de pile à combustible selon l'une quelconque des revendications 5 à 7, dans lequel le composant organique contenant de l'azote contient, dans la molécule, au moins un groupe choisi parmi un groupe hydroxyle, un groupe carboxyle, un groupe formyle, un groupe halocarbonyle, un groupe acide sulfonique, un groupe acide phosphorique, un groupe cétone, un groupe éther et un groupe ester.

9. Procédé de production d'un catalyseur d'électrode de pile à combustible selon l'une quelconque des revendications 5 à 8, dans lequel à l'étape 3, le résidu solide est traité thermiquement dans une atmosphère contenant un gaz argon, un gaz hélium ou un gaz azote.

10. Procédé de production d'un catalyseur d'électrode de pile à combustible selon l'une quelconque des revendications 5 à 8, dans lequel à l'étape 3, le résidu solide est traité thermiquement dans une atmosphère contenant un gaz hydrogène.

11. Encre contenant le catalyseur d'électrode de pile à combustible selon l'une quelconque des revendications 1 à 4.

12. Couche de catalyseur de pile à combustible comprenant le catalyseur d'électrode de pile à combustible selon l'une quelconque des revendications 1 à 4.

13. Electrode comprenant une couche de catalyseur de pile à combustible et une couche de diffusion de gaz, dans laquelle la couche de catalyseur de pile à combustible est la couche de catalyseur de pile à combustible selon la revendication 12.

14. Ensemble d'électrode à membrane comprenant une cathode, une anode et une membrane d'électrolyte interposée entre la cathode et l'anode, dans lequel la cathode est l'électrode selon la revendication 13.

15. Pile à combustible à électrolyte polymère comprenant l'ensemble d'électrode à membrane selon la revendication 14.
